(19) Europäisches Patentamt
European Patent Office
Office européen des brevets

(11) **EP 2 037 170 A1**

(12) **EUROPEAN PATENT APPLICATION**
published in accordance with Art. 153(4) EPC

(43) Date of publication:
**18.03.2009 Bulletin 2009/12**

(51) Int Cl.:
*F23C 99/00* (2006.01)   *B01D 53/94* (2006.01)
*F23C 13/00* (2006.01)   *F23N 1/02* (2006.01)
*F23N 5/00* (2006.01)

(21) Application number: **07741638.6**

(22) Date of filing: **13.04.2007**

(86) International application number:
**PCT/JP2007/058202**

(87) International publication number:
**WO 2008/004371 (10.01.2008 Gazette 2008/02)**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **04.07.2006 PCT/JP2006/313329
04.07.2006 JP 2006184879
06.07.2006 JP 2006186514
07.07.2006 JP 2006188546
31.07.2006 JP 2006208520**

(71) Applicant: **Miura Co., Ltd.
Matsuyama-shi, Ehime 799-2696 (JP)**

(72) Inventors:
• **TANAKA, Osamu
  Matsuyama-shi, Ehime 799-2696 (JP)**
• **TOKUNAGA, Yukihiro
  Matsuyama-shi, Ehime 799-2696 (JP)**
• **OKAMOTO, Yusuke
  Matsuyama-shi, Ehime 799-2696 (JP)**
• **YASUI, Kenji
  Matsuyama-shi, Ehime 799-2696 (JP)**

(74) Representative: **Schlotter, Alexander Carolus Paul
Wallinger Ricker Schlotter Foerstl
Patent- und Rechtsanwälte
Zweibrückenstrasse 5-7
80331 München (DE)**

(54) **BOILER**

(57)    First, an emission amount of nitrogen oxide can be decreased to zero as much as possible and, an emission amount of carbon monoxide is decreased to a permissible range. Second, energy saving by combustion at a low air ratio close to 1.0 is realized. Third, air ratio control is performed stably in a combustion region at a low air ratio. Provided is a boiler, including: a premixed burner; a water pipe group for, by heat exchanging with a gas produced by the premixed burner, suppressing a temperature of the gas to thereby suppress a concentration of nitrogen oxide to a predetermined value or less; an oxidation catalyst for oxidizing carbon monoxide contained in the gas after the passage through the water pipe group by oxygen and for reducing nitrogen oxide contained therein by carbon monoxide; and an air-ratio adjusting device for adjusting an air ratio of the premixed burner, in which: the premixed burner and the water pipe group have such characteristics that when the air ratio is a set air ratio, a concentration ratio of oxygen, nitrogen oxides, and carbon monoxide in the gas on a primary side of the oxidation catalyst becomes a predetermined concentration ratio; the oxidation catalyst has such characteristics that when the concentration ratio is a predetermined concentration ratio, a concentration of nitrogen oxides on a secondary side of the oxidation catalyst is substantially zero while a concentration of carbon monoxide is decreased to substantially zero or a predetermined value or less; and the predetermined concentration ratio is kept to be constant by being controlled to the set air ratio by the air-ratio adjusting device.

FIG. 1

**Description**

[Technical Field]

The present invention relates to a boiler applied to a water-tube boiler, a vapor boiler, a hot water boiler, and the like.

[Background art of the Invention]

Generally known principles of suppressing NOx emissions include the suppression of flame (combustion gas) temperatures and a decrease in retention time of combustion gas at high temperatures. As such, various technologies are available for decreasing the emission of NOx by applying these principles. Various methods have been proposed and put into practical use, for example, two-stage combustion, lean-rich combustion, exhaust gas recirculate combustion, water mixing combustion, steam injection combustion, and flame cooling combustion by a water tube group.

Moreover, NOx sources relatively small in capacity such as water-tube boilers are also beginning to be required for a further decrease in emission of NOx due to an increasing awareness of environmental problems. In this case, the decrease in NOx generation inevitably entails an increased amount of emitted CO, thus making it difficult to attain a simultaneous decrease in NOx and CO.

A cause of the above problem is that a simultaneous decrease in emission of NOx and CO is technically incompatible. More specifically, when temperatures of combustion gas are abruptly lowered and kept at temperatures of 900°C or less in an attempt to decrease the emission of NOx to result in an ample generation of CO, the thus generated CO is emitted before oxidization to increase the amount of emitted CO. In other words, temperatures of combustion gas are kept higher in an attempt to decrease the amount of emitted CO, thus resulting in an insufficient suppression of NOx generation.

In order to solve the above problem, the applicant has proposed low NOx and low CO emission technologies for decreasing the amount of CO as much as possible, which is generated in accordance with a decrease in the amount of NOx generation, and also suppressing temperatures of combustion gas so as to attain oxidation of the thus generated CO. The technologies are now commercially feasible (refer to Patent Documents 1 and 2). However, an actual value of emitted NOx remains to be about 25 ppm in the low NOx emission technologies described in Patent Documents 1 and 2.

In order to solve the above problem, the applicant has proposed a low NOx combustion method in which a NOx decreasing step is conducted to suppress temperatures of combustion gas so as to give priority to suppression of NOx generation rather than a decrease in the amount of emitted CO, thereby keeping the value of the thus generated NOx to a predetermined value or lower, and a CO decreasing step is, thereafter, conducted so as to keep the value of CO emitted from the NOx decreasing step to a predetermined value or lower (refer to Patent Documents 3 and 4). The technologies disclosed in Patent Documents 3 and 4 are able to decrease the amount of emitted NOx to a value lower than 10 ppm, but it is difficult to decrease the amount of emitted NOx to a value below 5 ppm. This is due to the fact that combustion characteristics inevitably entail NOx generation at 5 ppm or greater.

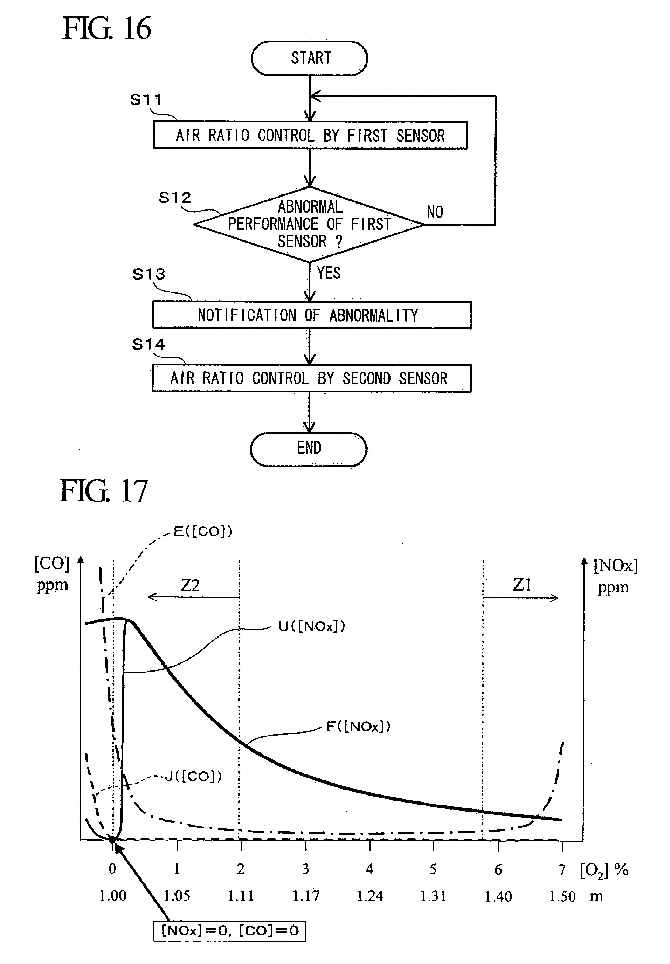

Then, in the low NOx emission technologies disclosed in Patent Documents 3 and 4, as shown in FIG. 17, combustion is conducted at a high air-ratio combustion region Z1 where the air ratio is 1.38 or greater. In contrast, at a combustion region Z2 where the air ratio is 1.1 or lower (hereinafter, referred to as "low air ratio"), nitrogen oxides are generated in an increased amount, thus making it difficult to attain a simultaneous decrease in the amount of emitted NOx and CO. There is also posed a difficulty in controlling a stable combustion due to a possible occurrence of backfire where the air ratio is 1 or lower. Therefore, the low air ratio combustion region Z2 has hardly been subjected to research and development. In FIG. 17, the lines F and E graphically show characteristics of NOx and characteristics of CO on a primary side of a combustion apparatus of the present invention, and the lines U and J graphically show characteristics of NOx and characteristics of CO on a secondary side of the combustion apparatus of the present invention. Both of the low NOx emission technologies disclosed in Patent Documents 3 and 4 are in principle those in which a burner is used to conduct combustion at the high air ratio region Z1, thereby suppressing the generation of NOx and removing the thus generated CO through an oxidation catalyst (Patent Documents 3 and 4).

On the other hand, there is a growing demand for operating boilers at a low air ratio not only to attain a greater decrease in emitted NOx but also to save energy.

In view of the above-mentioned circumstances, the inventors of the present application have been engaged in research and development of a combustion method for decreasing the amount of emitted nitrogen oxides to zero as much as possible by use of an oxidation catalyst.

Moreover, the method disclosed in Patent Document 5 is known as that of treating nitrogen oxide-containing gas generated on combustion by a burner.

According to the method of treating exhaust gas disclosed in Patent Document 5, a burner is used to conduct combustion at an air ratio lower than 1. 0, whereby oxygen is not contained in combustion exhaust gas but unburned components such as CO and HC (hydrocarbons) are contained, and a nitrogen oxide reducing catalyst is used to reduce nitrogen oxides by unburned components, thereby purifying the nitrogen oxides. Then, air is supplied to exhaust gas after purification, thereby purifying the unburned components by using an oxidation catalyst.

The treatment method disclosed in Patent Document 5 is not a method of decreasing carbon monoxide and nitrogen oxides in the presence of oxygen. Further, according to the method described in Patent Document 5, unburned hydrocarbons are emitted in a great amount, thus making it difficult to decrease the concentrations of emitted nitrogen oxides and emitted carbon monoxide to substantially zero by using an oxidation catalyst. Further, the oxidation catalyst characteristics in which an efficiency in reducing nitrogen oxides in the presence of hydrocarbons decrease cannot be used. Still further, in a step of reducing nitrogen oxides, a catalyst is used, which is different from that used in a step of oxidizing unburned components, resulting in a complicated treatment.

Further, a method of purifying nitrogen oxide-containing gas emitted from a gas engine is known in Patent Document 6. Patent Document 6 describes that nitrogen oxides and carbon monoxide are purified by using a three-way catalyst, which essentially requires the presence of hydrocarbons in gas and is applicable only to gas at a theoretical air ratio in which no excess oxygen is present. Therefore, the treatment method of Patent Document 6 is not suitable in treating combustion gas resulting from a boiler, which occurs on combustion by a burner and contains excess oxygen.

Still further, a technology in which an oxidation catalyst is used to reduce nitrogen oxides contained in exhaust gas derived from an incinerator by carbon monoxide is known in Patent Document 7. According to the technology of Patent Document 7, since nitrogen oxides is not reduced in the presence of oxygen in exhaust gas, fuel is burned at an excessively high concentration (air ratio of less than 1) on primary combustion, by which exhaust gas is kept deprived of oxygen. The technology in Patent Document 7 is subjected to such restriction that fuel is burned at an excessively high concentration, thus making it difficult to find an application for the combustion apparatus such as a burner-equipped boiler in which oxygen is contained in exhaust gas.

[Patent Document 1] Japanese Patent No. 3221582
[Patent Document 2] U.S. Patent No. 5353748
[Patent Document 3] Japanese unexamined Patent Application, First Publication No. 2004-125378
[Patent Document 4] U.S. Patent No. 6792895
[Patent Document 5] Japanese unexamined Patent Application, First Publication No. 2001-241619
[Patent Document 6] Japanese unexamined Patent Application, First Patent Document 5-38421
[Patent Document 7] Japanese unexamined Patent Application, First Publication No. 2003-275543

[Disclosure of the Invention]

[Problems to be solved by the Invention]

Main problems to be solved by the present invention is to decrease the amount of emitted nitrogen oxides and emitted carbon monoxide to zero as much as possible or a permissible value by using a simple method and also to obtain stable effects in decreasing hazardous substances.

[Means for Solving the Problems]

The inventors of the present application have conducted research for solving the above problems, finding a point at which the amount of emitted nitrogen oxides and carbon monoxide is decreased to substantially zero in a premixed burner combustion region at a low air ratio as close to 1 as possible (the region Z2 in FIG. 17), for which research has been so far hardly conducted for a boiler equipped with an oxidation catalyst to decrease carbon monoxide as described in Patent Documents 3 and 4. As a result, they have studied causes for which the amount of emitted nitrogen oxides and carbon monoxide can be decreased to substantially zero, thus obtaining a new finding that a concentration ratio of oxygen, nitrogen oxides, and carbon monoxide on the primary side of the oxidation catalyst is given as a predetermined reference concentration ratio, thereby an oxidation catalyst is used to decrease the amount of emitted nitrogen oxides and carbon monoxide as close to zero as possible. At the same time, the concentration ratio is adjusted in the vicinity of the predetermined reference concentration ratio, thereby obtaining a new finding that the amount of emitted hazardous substances (nitrogen oxides and carbon monoxide) can be decreased to substantially zero or a permissible value. The present invention has been completed on the basis of these findings. According to the present invention, it is possible not only to decrease the concentration of emitted hazardous substances to substantially zero but also to attain a remarkable energy savings due to the fact that the above decrease can be obtained at an air ratio as close to 1.0 as possible. Hereinafter, a simple reference of concentration ratio means a concentration ratio of oxygen, nitrogen oxides, and carbon monoxide on the primary side of the oxidation catalyst. The oxidation catalyst may include any known oxidation catalyst or a new oxidation catalyst.

In other words, the inventors of the present application have broken through technical common sense that oxygen is a barrier for reduction of nitrogen oxides by carbon monoxide on the basis of actions of an oxidation catalyst, as described in Patent Document 7 and used new technological approaches for utilizing oxygen to adjust a concentration relation ship between oxygen, nitrogen oxides, and carbon monoxide on the primary side of the oxidation catalyst to a predetermined relationship (a predetermined concentration ratio), thus finding a solution for the above problem.

The above problems include the following auxiliary problems. A first auxiliary problem is that hydrocarbons, which will inhibit the decrease in hazardous substances (NOx and CO) of the oxidation catalyst, are not contained in gas generated by a premixed burner. This auxiliary problem can be solved without use of the hydrocarbon removing device by conducting combustion at which no abrupt cooling is conducted like an internal combustion engine.

A second auxiliary problem is how to give a concentration ratio of the gas as the predetermined reference concentration ratio. Mere combustion by the premixed burner will not yield the predetermined reference concentration. This auxiliary problem can be solved by adjusting the concentration of oxygen, with the concentration ratio characteristics of the premixed burner taken into account, and adjusting it to the predetermined reference concentration ratio. By using a premixed burner, concentration ratio characteristics at which the concentration ratio can be adjusted relatively easily while combustion is conducted stably. The oxygen concentration is adjusted easily and further in a lower air ratio region by air-ratio adjustment of adjusting a ratio between the amount of a fuel supplied to the premixed burner and a combustion air amount. The air-ratio adjustment of the present invention adjusts not only the ratio between the fuel amount and the combustion air amount but also the concentration ratio, and thus, the air-ratio adjustment of the present invention is a novel adj ustment different from a conventional air ratio control.

Further, in the adjustment of the concentration ratio, when the concentration of nitrogen oxides in the gas is too high, the required amount of carbon monoxide increases, and the required concentration of carbon monoxide may not be obtained stably at the concentration ratio characteristics of the premixed burner. The present invention suppresses a combustion gas temperature by a water tube group to suppress the concentration of nitrogen oxides to be generated, whereby the concentration ratio can be adjusted easily.

A third auxiliary problem is as follows. Since the present invention intends to decrease the concentration of emitted hazardous substances to substantially zero or a value closer to zero, the concentration of emitted hazardous substances is increased on change in the concentration ratio due to change in ambient temperature, thus resulting in a failure of obtaining stably decreasing effects. This auxiliary problem can be solved by constantly controlling the concentration ratio. The concentration ratio constant-control can be attained by procedures in which air-ratio adjusting device are used as means for adjusting the concentration ratio to detect an air ratio, thus controlling the feedback of the air ratio.

As described above, the present invention is an epoch-making invention that has a remarkable effect of decreasing hazardous substances which can be called a zero NOx boiler, using a conventional burner, an oxidation catalyst, and an air ratio control, or even using a technology which is a direct extension thereof, and that can realize the energy saving and is friendly to the terrestrial environment.

The invention as described in Claim 1 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; and an air-ratio adjusting device for adjusting an air ratio of the premixed burner, in which the premixed burner and the water tube group have characteristics in which a concentration ratio of oxygen, nitrogen oxides, and carbon monoxide in gas on a primary side of the oxidation catalyst becomes a predetermined concentration ratio, assuming that the air ratio is a set air ratio, the oxidation catalyst has characteristics in which a concentration of nitrogen oxides on a secondary side of the oxidation catalyst is decreased to substantially zero and a concentration of carbon monoxide on the secondary side of the oxidation catalyst is decreased to substantially zero or a predetermined value or less, assuming that the concentration ratio is the predetermined concentration ratio, and the predetermined concentration ratio is kept to be constant by being controlled to the set air ratio by the air-ratio adjusting device. In the invention and the following description, "after the passage through a water tube group" includes "after the passage through the entire water tube group" and "after the passage through a part of the water tube group".

In this instance, the concentration of nitrogen oxides decreased to substantially zero is preferably 5 ppm, more preferably 3 ppm, and still more preferably zero. The concentration of carbon monoxide decreased to substantially zero is preferably 30 ppm and more preferably 10 ppm. Further, in the following description, the concentration of oxygen decreased to substantially zero is 100 ppm or lower and preferably below a measurement limit value. Still further, the concentration of nitrogen oxides and that of carbon monoxide lower than a predetermined value mean a value below the standard for concentrations of emissions stipulated in various territories and countries. However, as a matter of course, it is preferable to set the value to substantially zero. As described above, in the meaning of the standard for concentrations of emissions, a value equal to or below "predetermined value" may be referred to as "permissible value" or "emission standard value."

According to the invention as described in Claim 1, the air ratio of the burner is defined as a set air ratio and the concentration ratio of the gas is defined as the predetermined concentration ratio, utilizing the characteristics of the premixed burner and the water tube group, whereby the concentration of emitted nitrogen oxides is decreased to substantially zero and the concentration of emitted carbon monoxide can be decreased to substantially zero or a predetermined value or less by using the oxidation catalyst. Further, since the concentration of oxygen on a secondary side of the oxidation catalyst becomes substantially zero, so the premixed burner is used to conduct combustion at a low air ratio, which can realize energy saving. Further, the premixed burner is used to conduct combustion so that hydrocarbon is not emitted in the gas, so the combustion conducted by the premixed burner can be controlled easily, compared with a method for allowing combustion to be conducted so that hydrocarbon is emitted as in Patent Document 7. Since hydrocarbon is not contained in gas flowing to the oxidation catalyst, the complicated procedure as in Patent Document 5 is not used, and nitrogen oxides and carbon monoxide can be decreased effectively by the oxidation catalyst, and the predetermined concentration ratio can be adjusted easily without considering the reaction by hydrocarbon. Further, since the predetermined concentration is kept to be a substantially constant value by the air-ratio adjusting device, the fluctuation in the predetermined concentration ratio by the fluctuation in an outside air temperature can be suppressed, the stable effect of decreasing hazardous substances can be exhibited, and means for controlling the predetermined concentration ratio to be constant is not required separately from the air-ratio adjusting device, which can simplify the configuration of an apparatus. Further, since a premixed burner is used, the predetermined concentration ratio can be obtained relatively easily in a low air ratio region.

The invention as described in Claim 2 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; and an air-ratio adjusting device for adjusting an air ratio of the premixed burner, in which the premixed burner and the water tube group have characteristics in which a concentration ratio K of oxygen, nitrogen oxides, and carbon monoxide in gas on a primary side of the oxidation catalyst becomes a predetermined reference concentration ratio K0, assuming that the air ratio is a reference set air ratio, the oxidation catalyst has characteristics in which a concentration of nitrogen oxides and a concentration of carbon monoxide on a secondary side of the oxidation catalyst are decreased to substantially zero, assuming that the concentration ratio K is the predetermined reference concentration ratio K0, and the predetermined concentration ratio is kept to be constant by being controlled to the reference set air ratio by the air-ratio adjusting device.

According to the invention as described in Claim 2, the air ratio of the burner is defined as a set reference air ratio and the concentration ratio K of the gas is defined as the predetermined reference concentration ratio K0, utilizing the concentration ratio characteristics of the premixed burner and the water tube group, whereby the concentrations of emitted nitrogen oxides and emitted carbon monoxide can be decreased to substantially zero by using the oxidation catalyst. Further, also in the invention as described in Claim 2, other effects obtained in Claim 1 as described above can be exhibited similarly.

The invention as described in Claim 3 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; and an air-ratio adjusting device for adjusting an air ratio of the premixed burner, in which the premixed burner and the water tube group have characteristics in which a concentration ratio K of oxygen, nitrogen oxides, and carbon monoxide in gas on a primary side of the oxidation catalyst becomes a first predetermined concentration ratio K1, assuming that the air ratio is a first set air ratio, the oxidation catalyst has characteristics in which a concentration of nitrogen oxides on a secondary side of the oxidation catalyst is decreased to substantially zero and a concentration of carbon monoxide on the secondary side of the oxidation catalyst is decreased to a predetermined value or less, assuming that the concentration ratio K is the first predetermined concentration ratio K1, and the predetermined concentration ratio is kept to be constant by being controlled to the first set air ratio by the air-ratio adjusting device.

According to the invention as described in Claim 3, the air ratio of the burner is defined as a first set air ratio and the concentration ratio K of the gas is defined as the first predetermined concentration ratio K1, utilizing the concentration ratio characteristics of the premixed burner and the water tube group, whereby the concentration of emitted nitrogen oxides can be decreased to substantially zero and the concentration of emitted carbon monoxide can be decreased to a predetermined value or less by using the oxidation catalyst. Further, also in the invention as described in Claim 3, the effects obtained in Claim 1 and other effects as described above can be exhibited similarly.

The invention as described in Claim 4 provides the boiler according to Claim 2 or 3, in which a formula for determining the predetermined reference concentration ratio K0 is given as the following formula (1), the predetermined reference concentration ratio K0 satisfies the following formula (2), and the first predetermined concentration ratio K1 is made smaller than the reference concentration ratio K0.

According to the invention as described in Claim 4, the effects similar to those in Claims 2 and 3 can be exhibited.

The invention as described in Claim 5 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; a sensor for detecting an air ratio of the premixed burner; and an air-ratio adjusting device for controlling the premixed burner to a set air ratio based on a detected signal of the sensor, in which the premixed burner and the water tube group are configured so that, when the air-ratio adjusting device is used to adjust the air ratio to the set air ratio, a predetermined concentration of oxygen, nitrogen oxides, and carbon monoxide on a primary side of the oxidation catalyst, at which a concentration of nitrogen oxides on a secondary side of the oxidation catalyst is decreased to substantially zero and a concentration of carbon monoxide on the secondary side of the oxidation catalyst is decreased to substantially zero or a predetermined value or less, is obtained. In this Claim and the following Claims, the detected air ratio (air ratio detected by the sensor) and the set air ratio can be replaced by a detected air/fuel ratio and a set air/fuel ratio, respectively, or a detected oxygen concentration and a set oxygen concentration, respectively.

The invention as described in Claim 6 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; a sensor for detecting an air ratio of the premixed burner; and an air-ratio adjusting device for controlling the premixed burner to a set air ratio based on a detected signal of the sensor, in which the premixed burner and the water tube group have characteristics of air ratio-NOx/CO in which, when the air ratio is adjusted to the set air ratio by the air-ratio adjusting device, a concentration of nitrogen oxides and a concentration of oxygen on a secondary side of the oxidation catalyst is decreased to substantially zero, and a concentration of carbon monoxide on the secondary side of the oxidation catalyst is decreased to substantially zero or a predetermined value or less.

The invention as described in Claim 7 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; a sensor for detecting an air ratio of the premixed burner; and an air-ratio adjusting device for controlling the premixed burner to a set air ratio based on a detected signal of the sensor, in which the premixed burner and the water tube group are configured so that, when the air-ratio adjusting device is used to adjust the air ratio to the set air ratio, the concentration of carbon monoxide on a primary side of the oxidation catalyst is substantially equal to or greater than a value obtained by adding a concentration of carbon monoxide decreased inside the oxidation catalyst due to the oxidation to a concentration of carbon monoxide decreased inside the catalyst due to the reduction.

The invention as described in Claim 8 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbonmonoxide; a sensor for detecting an air ratio of the premixed burner; and an air-ratio adjusting device for controlling the premixed burner to a set air ratio based on a detected signal of the sensor, in which the premixed burner and the water tube group are configured so that, when the air-ratio adjusting device is used to adjust the air ratio to the set air ratio, a concentration ratio of the gas before flowing into the oxidation catalyst satisfies the following formula (3):

$$([NOx] + 2[O_2]) / [CO] \leq 2.0 \cdots (3)$$

where $[CO]$, $[NOx]$, and $[O_2]$ represent concentrations of carbon monoxide, nitrogen oxides, and oxygen, respectively, and satisfying a condition of $[O_2] > 0$.

According to the inventions as described in Claims 5 to 8, the effect similar to that in Claim 1 can be exhibited.

The invention as described in Claim 9 includes, according to Claims 5 to 8, the set air ratio of substantially 1.0.

According to the invention as described in Claim 9, the effect of realizing energy saving by low-air ratio combustion close to 1 as much as possible can be exhibited, in addition to the effects by the inventions as described in Claims 5 to 8.

The invention as described in Claim 10 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst for oxidizing carbon monoxide contained in the gas after the passage through the water tube group by oxygen and reducing the nitrogen oxides contained in the gas by carbon monoxide; and an air-ratio adjusting device for adjusting an air ratio of the premixed burner, in which the premixed burner and the water tube group have characteristics of air ratio-NOx/CO on a primary side of the oxidation catalyst regarding the gas containing oxygen, nitrogen oxides, and carbonmonoxide on the primary side of the oxidation catalyst obtained by adjusting in a vicinity of an air ratio of 1.0 by the air-ratio adjusting device, the oxidation catalyst has characteristics of air ratio-NOx/CO on a secondary side of the oxidation catalyst obtained by bringing a gas having the characteristics of air ratio-NOx/CO on the primary side into contact with the oxidation catalyst, and the air-ratio adjusting device controls an air ratio of the premixed burner at a set air ratio at which a concentration of nitrogen oxides on the secondary side of the oxidation catalyst is decreased to substantially zero in a NOx/CO decreasing region of the characteristics of air ratio-NOx/CO on the secondary side.

According to the invention as described in Claim 10, the set air ratio is controlled, whereby the concentration of emitted nitrogen oxides can be decreased to substantially zero and the concentration of emitted carbon monoxide can be decreased to substantially zero or a predetermined value or less, using the oxidation catalyst. Other effects are similar to those in Claims 5 to 8.

The invention as described in Claim 11 includes: a premixed burner for burning a hydrocarbon-containing fuel to generate a gas free of hydrocarbon but containing oxygen, nitrogen oxides, and carbon monoxide; a water tube group for absorbing heat from the gas generated by the premixed burner; an oxidation catalyst that is brought into contact with the gas containing oxygen, nitrogen oxides, and carbon monoxide after the passage through the water tube group; and an air-ratio adjusting device for adjusting a ratio between a combustible air amount of the premixed burner and a fuel amount, in which the oxidation catalyst has characteristics of decreasing a concentration of carbon monoxide by: when a concentration ratio of oxygen, nitrogen oxides, and carbon monoxide in a gas on a primary side of the oxidation catalyst at which a concentration of nitrogen oxides and a concentration of carbon monoxide on a secondary side of the oxidation catalyst are decreased to substantially zero is a reference concentration ratio, and the concentration ratio is the reference concentration ratio, concentrations of oxygen, nitrogen oxides, and carbon monoxide on the secondary side of the oxidation catalyst being decreased to substantially zero; and when a concentration of oxygen on the primary side is lower than a concentration of the reference oxygen, concentrations of nitrogen oxides and oxygen on the secondary side of the oxidation catalyst being decreased to substantially zero, and the air-ratio adjusting device adjusts a concentration of oxygen on the primary side of the oxidation catalyst with respect to the concentration of the reference oxygen by adjusting the air ratio based on concentrations of oxygen and/or carbon monoxide on the secondary side of the oxidation catalyst, and decreases a concentration of nitrogen oxides on the secondary side of the oxidation catalyst and the concentration of carbon monoxide on the secondary side of the oxidation catalyst to substantially zero, thereby decreasing the concentration of carbon monoxide or decreasing the concentration of carbon monoxide to substantially zero.

According to the invention as described in Claim 11, the set air ratio is controlled, whereby the concentration of emitted nitrogen oxides can be decreased to substantially zero and the concentration of emitted carbon monoxide can be decreased to substantially zero or a predetermined value or less by the oxidation catalyst. Other effects are similar to those in Claims 5 to 8.

The invention as described in Claim 12 includes, according to any one of Claims 1 to 3, 5 to 8, 10, and 11, a nitrogen oxide generation suppressing device for suppressing a temperature of the gas to suppress a concentration of nitrogen oxides to a predetermined value or less.

According to the invention as described in Claim 12, since the generation of NOx is suppressed to a predetermined value or less, the effect of being capable of decreasing the use amount of the oxidation catalyst is exhibited in addition to the effects by the inventions as described in Claims 1 to 3, 5 to 8, 10, and 11.

The invention as described in Claim 13 includes, according to any one of Claims 1 to 3, 5 to 8, 10, and 11, a feed-water preheater on the secondary side of the oxidation catalyst.

According to the invention as described in Claim 13, since heat generated by the oxidation catalyst can be collected in the feed-water preheater, the effect of being capable of realizing further energy saving is exhibited in addition to the effects by the inventions as described in Claims 1 to 3, 5 to 8, 10, and 11. Further, by decreasing the emission amount of nitrogen oxides to substantially zero, the corrosion of the feed-water preheater can be suppressed.

The invention as described in Claim 14 includes, according to any one of Claims 1 to 3, 5 to 8, 10, and 11, a second sensor for detecting abnormality of the catalyst or the sensor; a notifying device; and a control device for determining the abnormality based on a detected value of the second sensor to notify the abnormality by the notifying device.

According to the invention as described in Claim 14, an administrator of the boiler is informed of the abnormality of the oxidation catalyst or the sensor to address the abnormality, whereby the effect of being capable of preventing the emission of a great amount of carbon monoxide is exhibited, in addition to the effects by the inventions as described in Claims 1 to 3, 5 to 8, 10, and 11.

[Effects of the Invention]

According to the present invention, the concentration ratio is adjusted to the predetermined concentration ratio by the air-ratio adjusting device, whereby the emission amounts of nitrogen oxides and carbon monoxide can be decreased to close to zero as much as possible by using the oxidation catalyst. Further, the decrease in hazardous substances can be realized stably. Further, the configuration of an apparatus can be simplified without requiring separately means for controlling a concentration ratio to be constant. Further, compared with a premixed burner, combustible air and a fuel can be mixed uniformly to be burned, and gas at the predetermined concentration ratio can be generated stably and relatively easily with less generation amounts of hydrocarbon and CO even in the vicinity of a theoretical air ratio.

[Brief Description of the Drawings]

[FIG. 1] A longitudinal sectional view for explaining a steam boiler of Embodiment 1.
[FIG. 2] A sectional view taken along line II to II in FIG. 1.
[FIG. 3] A view showing a constitution of major parts when an oxidation catalyst given in FIG. 2 is viewed from a direction in which exhaust gas flows.
[FIG. 4] A drawing showing characteristics of air ratio-NOx/CO in Embodiment 1.
[FIG. 5] A partial sectional view for explaining a damper position adjusting device of Embodiment 1, which is in operation.
[FIG. 6] A sectional view for explaining maj or parts of the damper position adjusting device.
[FIG. 7] A pattern diagram for explaining characteristics of a burner and an endothermic device and those of a catalyst given in Embodiment 1.
[FIG. 8] A drawing for explaining output characteristics of the sensor given in Embodiment 1.
[FIG. 9] A drawing for explaining motor controlling characteristics in Embodiment 1.
[FIG. 10] A drawing for explaining the NOx and CO decreasing characteristics in Embodiment 1.
[FIG. 11] A longitudinal sectional view for explaining a steam boiler of Embodiment 2.
[FIG. 12] A drawing for explaining motor controlling characteristics in Embodiment 2.
[FIG. 13] A longitudinal sectional view for explaining a steam boiler of Embodiment 3.
[FIG. 14] A longitudinal sectional view for explaining a steam boiler of Embodiment 4.
[FIG. 15] A flowchart for explaining a control procedure of Embodiment 4.
[FIG. 16] A flowchart for explaining a control procedure of Embodiment 4.
[FIG. 17] A drawing for explaining primary characteristics and secondary characteristics of NOx and CO in the present invention.

[Description of the Reference Symbols]

1: burner
2: water tube group (heat transfer tube group)
4: oxidation catalyst
7: sensor
8: controller
28: air-ratio adjusting device
29: damper
30: damper position adjusting device
34: motor

[Best Mode for carrying out the Invention]

Next, an explanation will be given for embodiment modes of the present invention. An explanation will be made for terms used in the present application before the embodiment modes of the present invention will be explained. "Gas" refers to gas before completely passing from a burner through an oxidation catalyst (which can be also referred to as an oxidation/reduction catalyst and hereinafter simply referred to as "catalyst"), and gas which has passed through the catalyst refers to "exhaust gas." Therefore, the gas includes that in which burning reactions are in progress (combustion process) and that in which the burning reactions have been completed, and can be also referred to as combustion gas.

In this instance, where the catalyst is installed in multiple stages along the gas flow, the "gas" is defined as gas before completely passing through the catalyst at a final stage, and "exhaust gas" is defined as gas after passing through the catalyst at the final stage.

A "primary side of the catalyst" is a side where a burner is installed with respect to a catalyst, referring to immediately before the passage of gas through the catalyst unless otherwise specified, whereas a "secondary side of the catalyst" is a side opposite to the primary side of the catalyst.

Further, "free of hydrocarbons" does not mean that hydrocarbons will not be generated at all in a process of burning reactions, but means that hydrocarbons are generated to some extent during the process of burning reactions but hydrocarbons, which reduce nitrogen oxides are not substantially contained (a measurement limit or lower) in gas flowing into the catalyst at a stage where the burning reactions are completed.

Further, an air ratio m is defined as $m = 21/(21 - [O_2])$. Note that $[O_2]$ represents the concentration of oxygen in exhaust gas on the secondary side of the catalyst, but $[O_2]$ used in determining an air ratio represents the concentration of excess oxygen in an oxygen excess region and also represents as a negative value the concentration of insufficient oxygen necessary for burning unburned gas such as carbon monoxide at the air ratio of $m = 1$ in a fuel excess region.

Next, an explanation will be made for embodiment modes of the present invention. The present invention is applicable to a water-tube boiler such as a small through-flow boiler, a hot-water supply system, and a combustion apparatus (also referred to as a thermal component or a combustion device) used in a regenerator for an absorption refrigerator.

(Embodiment 1)

Embodiment 1 of the present invention is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; and air-ratio adjusting device for adjusting an air ratio of the premixed burner, in which the premixed burner and the water tube group have characteristics in which a concentration ratio among oxygen, nitrogen oxides, and carbon monoxide in gas on a primary side of the oxidation catalyst becomes a predetermined concentration ratio, assuming that the air ratio is a set air ratio, the oxidation catalyst has characteristics in which the concentration of nitrogen oxides on a secondary side of the oxidation catalyst is decreased to substantially zero and the concentration of carbon monoxide is decreased to substantially zero or a predetermined value or less, assuming that the concentration ratio is the predetermined concentration ratio, and the predetermined concentration ratio is kept to be constant by being controlled to the set air ratio by the air-ratio adjusting device. Embodiment 1 includes Embodiment Modes 2 and 3 as described below.

(Embodiment Mode 2)

Embodiment 2 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; and air-ratio adjusting device for adjusting an air ratio of the premixed burner, in which the premixed burner and the water tube group have characteristics in which a concentration ratio K among oxygen, nitrogen oxides, and carbon monoxide in gas on a primary side of the oxidation catalyst becomes a predetermined reference concentration ratio K0, assuming that the air ratio is a set reference air ratio, the oxidation catalyst has characteristics in which the concentrations of nitrogen oxides and carbon monoxide on a secondary side of the oxidation catalyst is decreased to substantially zero, assuming that the concentration ratio K is the predetermined reference concentration ratio K0, and the predetermined concentration ratio is kept to be constant by being controlled to the set reference air ratio by the air-ratio adjusting device.

(Embodiment Mode 3)

Further, Embodiment Mode 3 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; and air-ratio adjusting device for adjusting an air ratio of the premixed burner, in which the premixed burner and the water tube group have characteristics in which a concentration ratio K among oxygen, nitrogen oxides, and carbon monoxide in gas on a primary side of the oxidation catalyst becomes a first predetermined concentration ratio K1, assuming that the air ratio is a first set air ratio, assuming that the air ratio is a first set air ratio, the oxidation catalyst has characteristics in which the concentration of nitrogen oxides on a secondary side of the oxidation catalyst is decreased to substantially zero and the concentration of carbon monoxide is decreased to a predetermined value or less, assuming that the concentration ratio K is the first predetermined concentration ratio K1, and the predetermined concentration ratio is kept to be constant by being controlled to the first set air ratio by the air-ratio adjusting device.

The predetermined reference concentration ratio K0 and the first predetermined concentration ratio K1 are respectively subjected to Adjustments 0 and 1 as described below by being controlled to be the reference set air ratio and the first set air ratio.

Adjustment 0: the concentration ratio K is adjusted to a predetermined reference concentration ratio K0 in which a concentration of nitrogen oxides and a concentration of carbon monoxide on the secondary side of the oxidation catalyst are decreased to substantially zero.

Adjustment 1: the concentration ratio K is adjusted to a first predetermined concentration ratio K1 in which the concentration of nitrogen oxides on the secondary side of the oxidation catalyst is decreased to substantially zero and the concentration of carbon monoxide on the secondary side of the oxidation catalyst is decreased to a predetermined value or lower.

Then, the catalyst is characterized in that it decreases each of the concentration of nitrogen oxides and that of carbon monoxide on the secondary side of the catalyst to substantially zero when Adjustment 0 is made, decreasing the concentration of nitrogen oxides and that of carbon monoxide on the secondary side of the catalyst to substantially zero and a predetermined value or lower, respectively, when Adjustment 1 is made.

In Embodiment Modes 2 and 3, the concentration ratio means a mutual relationship between the concentration of carbon monoxide, that of nitrogen oxides, and that of oxygen. A predetermined reference concentration ratio K0 of Adjustment 0 is determined by the following determination formula (1), and preferably set in such a manner that it satisfies the following formula (2), and the first predetermined concentration ratio K1 is made smaller than the predetermined reference concentration ratio K0.

$$([NOx] + 2[O_2]) / [CO] = K \cdots (1)$$

$$1.0 \leq K = K0 \leq 2.0 \qquad \cdots (2)$$

(in the formula (1), [CO], [NOx], and [O_2] represent concentrations of carbon monoxide, nitrogen oxides, and oxygen, respectively, and satisfying the condition of $[O_2] > 0$).

In other words, the predetermined reference concentration ratio K0 is a concentration ratio of oxygen, nitrogen oxides, and carbon monoxide on the primary side of the oxidation catalyst in which the concentration of oxygen, that of nitrogen oxides, and that of carbonmonoxide on the secondary side of the oxidation catalyst are each decreased to substantially zero. Formula (1) is a determination formula to determine the predetermined reference concentration ratio K0, and formula (2) indicates conditions for decreasing the concentration of oxygen, that of nitrogen oxides, and that of carbon monoxide on the secondary side of the oxidation catalyst to substantially zero. Theoretically, each of these concentrations can be decreased to zero under the condition of K0 = 1.0. However, experimental results have confirmed that each of the concentrations can be decreased to substantially zero within a scope of formula (2) and an upper limit of the K0, 2.0, may be a value greater than 2.0, depending on characteristics of the catalyst.

When a concentration ratio K on the primary side of the oxidation catalyst is adjusted so that it is lower than the predetermined reference concentration ratio K0, in other words, K in formula (1) is given as the first predetermined concentration ratio K1 which is smaller than K0 (Adjustment 1) the concentration of oxygen and that of nitrogen oxides on the secondary side of the oxidation catalyst are decreased to substantially zero and the concentration of carbon monoxide is decreased to a predetermined value or lower. The predetermined value of the concentration of carbon monoxide is preferably set to be an emission standard value or lower (since this value is different depending on countries, it may be changed in each of the countries). Upon determination of the predetermined value, it is possible to determine experimentally the first predetermined concentration ratio K1. Specifically, such adjustment of the concentration ratio K that a value of the concentration ratio K is given as the first predetermined concentration ratio K1, which is smaller than K0, can be made by making smaller a ratio of the concentration of oxygen to that of carbon monoxide on the primary side of the oxidation catalyst than a ratio of the concentration of oxygen to that of carbon monoxide, which satisfies the predetermined reference concentration ratio K0.

In Embodiment Modes 1 to 3 as described above, first, the premixed burner is used to effect combustion so that oxygen is present on a primary side of the oxidation catalyst. As a result of the combustion, gas containing oxygen, nitrogen oxides, and carbon monoxide but free of hydrocarbon is generated. The concentration ratio K among oxygen, nitrogen oxides, and carbon monoxide in the gas on a primary side of the catalyst is adjusted to the predetermined reference concentration ratio K0 and the first predetermined concentration ratio K1 respectively by the premixed burner and the water tube group. Then, the gas comes into contact with the catalyst, whereby carbon monoxide is oxidized by oxygen in the gas and nitrogen oxides are reduced by carbon monoxide. The role of oxygen in the case where Adjustment 0 or 1 is conducted is to adjust the concentration of carbon monoxide, i.e., to consume and decrease the amount of carbon monoxide present in an amount more than necessary for reducing the nitrogen oxides to decrease the concentration thereof to substantially zero. Due to the contact with the catalyst after Adjustments 0 and 1, the emission amount of nitrogen oxides in the gas is decreased to substantially zero, and the emission amount of carbon monoxide is decreased to substantially zero or a predetermined value or less. Further, the concentration ratio is controlled to be constant, whereby the fluctuation in values of the respective predetermined concentration ratios K0 and K is suppressed, and the effect of decreasing the emission amount of nitrogen oxides and the emission amount of carbon monoxide can be exhibited. In particular, the control of setting the concentration ratio to be constant is important for decreasing the emission amount of nitrogen oxides to substantially zero in Adjustment 0.

A predetermined reference concentration ratio K0 of Adjustment 0 and a first predetermined concentration ratio K1 of Adjustment 1 can be collectively expressed by the following formula (3). In other words, when formula (3) is satisfied, the concentration of nitrogen oxides on the secondary side of the catalyst is decreased to substantially zero, and the concentration of carbon monoxides on the secondary side of the catalyst is decreased to substantially zero, otherwise the concentration of carbon monoxide is decreased. In order to decrease the concentration of carbon monoxide to a value equal to or lower than the predetermined value, the concentration ratio K on the primary side of the oxidation catalyst is adjusted so that the left-hand value in the formula (3) will be a value smaller than K0, thereby obtaining the first predetermined concentration ratio K1.

$$([NOx] + 2[O_2]) \; / \; [CO] = K \leq 2.0 \; \cdots (3)$$

where [CO], [NOx], and [O$_2$] represent the concentrations of CO, NOx, and O$_2$, respectively, and satisfying the condition of [O$_2$] > 0.

(Embodiment Mode 4)

The present invention includes Embodiment 4 as described below. Embodiment Mode 4 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; a sensor for detecting an air ratio of the premixed burner; and air-ratio adjusting device for controlling the premixed burner to a set air ratio based on the detection signal of the sensor, in which the premixed burner and the water tube group are configured so as to obtain a predetermined concentration ratio of oxygen, nitride oxides, and carbon monoxide on a primary side of the oxidation catalyst at which the concentration of nitrogen oxides in a secondary side of the oxidation catalyst is decreased to substantially zero and the concentration of carbon monoxide is decreased to substantially zero or a predetermined value or less, when the air ratio is adjusted to the set air ratio by the air-ratio adjusting device.

The set air ratio is preferably controlled to 1.0. The air ratio can be also controlled so that the concentration of oxygen becomes a predetermined concentration on the primary side of the catalyst, which is capable of satisfying the set air ratio of 1.0 as a result of reactions on the catalyst.

In Embodiment Mode 4 of the present invention, combustion is effected in the burner, with the air ratio controlled by the air-ratio adjusting device so as to give the set air ratio. Gas generated on combustion is subjected to endothermic actions by the water tube group. Thereafter, carbon monoxide is oxidized by the catalyst and nitrogen oxides are reduced. As a result, the amount of emitted nitrogen oxides in the gas is decreased to a value close to zero, or 5 ppm or lower. The amount of emitted carbon monoxide is also decreased.

According to Embodiment Mode 4 of the present invention, the air ratio is controlled by the air-ratio adjusting device so as to give the set air ratio, thus making it possible to obtain a concentration ratio of oxygen, nitrogen oxides, and carbon monoxide on the primary side of the catalyst in which the concentration of nitrogen oxides on the secondary side of the catalyst is decreased to substantially zero.

In controlling a low air ratio, it is difficult to obtain a stable control of the air ratio. However, the air-ratio adjusting device is provided with electrical control device and/or mechanical control device for stably controlling the air ratio, thus making it possible to obtain stable control of the air ratio.

The concentration ratio adjustment on the primary side of the catalyst is preferably controlled in such a manner that the concentration of carbon monoxide in the gas on the primary side of the catalyst is approximately equal to or higher than a value obtained by adding the concentration of carbon monoxide decreased inside the catalyst by oxidation of carbon monoxide (first reaction) to the concentration of carbon monoxide decreased inside the catalyst by reduction of nitrogen oxides by carbonmonoxide (second reaction).

Hereinafter, the function of decreasing hazardous substances (nitrogen oxides and carbon monoxide) will be described further. The decrease function is considered to be performed as follows. In gas free of HC (hydrocarbon), a first reaction for oxidizing carbon monoxide and a second reaction for reducing nitrogen oxides by carbon monoxide are effected as main reactions in the catalyst. Then, in a reaction in the catalyst (catalyst reaction), the first reaction is predominant compared with the second reaction in the presence of oxygen. Therefore, carbonmonoxide is consumed by oxygen to have its concentration adjusted based on the first reaction, and thereafter, nitrogen oxides are reduced by the second reaction. This description is simplified. Actually, although the first reaction is a competitive reaction with respect to the second reaction, the reaction between carbon monoxide and oxygen is effected apparently faster than the second reaction in the presence of oxygen, so it is considered that the first reaction is effected in a first stage and the second reaction is effected in a second stage.

In short, in the catalyst, in the presence of oxygen, oxygen is consumed by the first reaction: $CO + 1/2O_2 \rightarrow CO_2$, and nitrogen oxides are reduced using the remaining CO by the second reaction: $2CO + 2NO \rightarrow N_2 + 2CO_2$, whereby the concentration of emitted nitrogen oxides is decreased.

At this time, in the description of the reaction formulas, the reason why NO is used instead of NOx is that the composition of generated nitrogen oxides at a high temperature can be described approximately because NO is a main component and the amount of $NO_2$ is merely several %. Even if $NO_2$ is present, it is considered to be reduced by CO in a similar manner to that of NO.

[0076]    Both the burner and the water tube group adjust the concentration ratio, that is, the concentration ratio is adjusted using the concentration ratio characteristics of the burner and the group of water groups. The concentration ratio characteristics refer to the characteristics in which the concentrations of carbon monoxide and nitrogen oxides after the passage through the whole or a part of the water tube group, which are generated on combustion with an air ratio of the burner being changed, change. Further, the concentration ratio characteristics are basically determined by the concentration ratio characteristics by the burner, and the water tube group typically have a function of changing a part of the concentration ratio characteristics of the burner or holding the concentration ratio characteristics thereof. The form of the water tube group includes a first aspect (corresponding to the Patent Documents 1 to 4) in which a water tube group are arranged in a combustion space with a combustion space being hardly provided in the vicinity of the burner, and a second aspect having a combustion space between the burner and the water tube group. In the first aspect, a combustion reaction proceeds in a gap of the water tube group. In the case where the water tube group is set to be the first aspect, the concentration of carbon monoxide is increased and the concentration of nitrogen oxides is suppressed by cooling of gas during the combustion reaction. In the case where the water tube group is set to be the second aspect, typically, the concentration ratio characteristics by the burner are kept with being hardly changed.

Then, the burner and the water tube group have the following characteristics of air ratio-NOx/CO. The characteristics of air ratio-NOx/CO refer to the characteristics of obtaining the concentration ratio among oxygen, nitrogen oxides, and carbon monoxide in gas on a primary side of the catalyst at which the concentration of nitrogen oxides on a secondary side of the catalyst is decreased to substantially zero when the air ratio is adjusted to the set air ratio by the air-ratio adjusting device. The characteristicsof air ratio-NOx/CO preferablyset the concentration of the nitrogen oxides on the primary side of the catalyst at 300 ppm or less. Thus, the use amount of the catalyst can be decreased.

Further, the concentration ratio adjustment by the burner and the water tube group is performed by determining characteristics of air ratio-NOx/CO (concentration ratio characteristics) based on experimental data. As a result of the concentration ratio adjustment, the concentration of carbon monoxide in the gas on a primary side of the catalyst becomes substantially equal to or more than the sum of the concentration of carbon monoxide decreased in the catalyst by oxidation of carbon monoxide and the concentration of carbon monoxide decreased in the catalyst by reduction of nitrogen oxides by carbon monoxide. Here, the present invention also includes the case where elements other than a water tube group are included as the constituent elements participating in the concentration ratio adjustment.

In the concentration ratio adjustment, it is preferred that the air ratio is controlled to a set air ratio of substantially 1.0, because energy saving can be achieved. Further, the concentration ratio adjustment is performed preferably by suppressing the amount of nitrogen oxides and the amount of carbon monoxide to a predetermined amount or lower by adjusting a combustion temperature, i.e., cooing gas during a combustion reaction from the burner, and by preventing the obtained concentration of carbon monoxide frombeing decreased by keeping the gas temperature. Carbon monoxide is likely to be oxidized at a gas temperature of about 900°C or higher. Therefore, the burner and the water tube group are constituted preferably so that the gas temperature on a primary side of the catalyst is kept at 600°C or lower.

The formula representing the range of the concentration ratio can be expressed by the formula (3). Here, the value (value of a concentration ratio) of ($[NOx] + 2[O_2]$)/[CO] is set to be 2.0 or less, and preferably 1.5 or less. Further, the concentration of nitrogen oxides ([NOx]) is a total concentration of the concentration of nitrogen monoxide ([NO]) and the concentration of nitrogen dioxide ([NO]). Further, the concentration ratio among the concentration of carbon monoxide, the concentration of nitrogen oxides, and the concentration of oxygen satisfying the formula (3) is referred to as a predetermined concentration ratio.

In the case where the value of the predetermined concentration ratio is 1.0, the concentrations of oxygen, nitrogen oxides, and carbon monoxide emitted from the catalyst can be set to be zero theoretically. However, it is understood that a slight amount of carbon monoxide is emitted based on an experiment. ($[NOx] + 2[O_2]$)/[CO] = 1 in the formula (1) is theoretically derived from the first and second reactions, considering the experimental results.

Here, how to derive ($[NOx] + 2[O_2]$)/[CO] = 1 will be described. This formula typically satisfies the predetermined reference concentration ratio K0, so it is referred to as a predetermined reference concentration satisfying formula. In the catalyst, it is known that the first reaction (I) is effected as a main reaction.

$$CO + 1/2O_2 \rightarrow CO_2 \qquad \cdots \ (I)$$

Further, in a catalyst using a noble metal catalyst such as Pt, a NO reduction reaction by CO is effected by the second reaction (II) in an atmosphere free of oxygen.

$$CO + NO \rightarrow CO_2 + 1/2N_2 \qquad \cdots \ (II)$$

Then, paying attention to the concentration of substances contributing to the reactions such as the first reaction (I) and the second reaction (II), the reference concentration satisfying formula is derived.

More specifically, assuming that a CO concentration, an NO concentration, and an $O_2$ concentration are respectively [CO] ppm, [NO] ppm, and [$O_2$] ppm, the concentration of oxygen which can be removed by CO by the formula (I) is expressed by the following formula (III).

$$2[O_2] = [CO]_a \qquad \cdots \ (III)$$

Further, in order to effect the reaction of the formula (II), it is necessary that CO is equivalent to NO, and the relationship of the following formula (IV) is held.

$$[CO]_b = [NO] \qquad \cdots \ (IV)$$

In the case where the reactions of the formulae (I) and (II) are effected continuously in the catalyst, a concentration relationship of the following formula (V) obtained by adding the formula (III) to the formula (IV) is required.

$$[CO]_a + [CO]_b = 2[O_2] + [NO] \qquad \cdots \ (V)$$

$[CO]_a + [CO]_b$ is the same components, so the CO concentration in gas on a secondary side of the catalyst can be expressed by [CO] .

Accordingly, the predetermined reference concentration ratio satisfying formula, i.e., a relationship: $[CO] = 2[O_2] + [NO]$ can be derived.

In the case where the value of the predetermined concentration ratio is smaller than 1.0, carbon monoxide is present in a concentration more than necessary for reducing the nitrogen oxides, so the concentration of emitted oxygen is zero and carbon monoxide remains in gas after the passage through the catalyst. Therefore, a lower value of the concentration ratio in the formula (3) is not provided. In the case where carbon monoxide is contained after the passage through the catalyst, it is preferred to further provide oxidizing device for oxidizing the remaining carbon monoxide. The oxidizing device can be constituted by providing a catalyst separately from the catalyst, and oxygen is injected on an upstream side of the catalyst to oxidize carbon monoxide.

Further, the value of the concentration ratio of 2.0 exceeds 1.0, which is obtained experimentally. The reason for this is considered as follows. The reaction effected in the catalyst has not been clarified completely, and it is considered that an auxiliary reaction is effected other than the main reaction such as the first reaction and the second reaction. As one auxiliary reaction, a reaction in which hydrogen is generated by the reaction between vapor and carbon monoxide, and nitrogen oxides and oxygen are reduced by the hydrogen is considered.

Next, the constituent elements of embodiment modes of the present invention will be described further. The burner is assumed preferably to be a primary aerated-type premixed burner that subj ects a gas fuel to premixed combustion. In order to allow the first reaction and the second reaction to be effected effectively in the catalyst, the concentration ratio as represented by the formulae (2) and (3) regarding oxygen, nitrogen oxides, and carbon monoxide is important. By using a premixed burner as the burner, the predetermined concentration ratio can be obtained relatively easily in a low air ratio region.

Further, assuming that the oxygen concentration $O_2$ on a primary side of the catalyst is $0\% < O_2 \leq 1.00\%$ under the condition satisfying the formula (3), the air ratio becomes substantially 1.0, and energy saving is realized in addition to low NOx and low CO in which emission concentration is close to zero, whereby an energy-saving combustion apparatus with a low pollution can be provided.

Further, the water tube group are used as water tubes in the case where the combustion apparatus is a boiler, and absorbing liquid concentration tubes in the case where the combustion apparatus is a reproducer. Then, the water tube group also have a function of controlling the temperature of gas flowing to the catalyst to be in the vicinity of an activation temperature of the catalyst. More specifically, the gas temperature is controlled to be the one at which durability is taken into consideration by allowing the first reaction and the second reaction to be effected effectively and suppressing the degradation by the temperature. Although the water tube group are a plurality of water tubes for heat exchange of the gas from the burner, a plurality of water tubes can be constituted by meandering one water tube as in a water tube of a gas water heater.

The catalyst has a function of reducing the nitrogen oxides efficiently in a state where the gas does not contain HC. The catalyst is configured so as to be provided in a wake flow or at a midpoint of the water tube group, and carry a catalyst activating substance on a matrix having air permeability, and the structure of the catalyst is not particularly limited. As the matrix, metal such as stainless steel and ceramic are used, and subjected to a surface treatment of enlarging the contact area with respect to exhaust gas. As the catalyst activating substance, platinum is generally used, and noble metal (Ag, Au, Rh, Ru, Pt, Pd) typified by platinum or a metal oxide can be used depending on implementation. In the case where the catalyst is provided at a midpoint of the water tube group, the catalyst can be provided in a gap among a plurality of water tubes, and the catalyst can be configured so as to carry a catalyst activating substance on the surface by using the water tube as a matrix.

The air-ratio adjusting device includes flow rate adjusting device, a motor for driving the flow rate adjusting device, and control device for controlling the motor. The flow rate adjusting device changes either one or both of the combustible air amount and the fuel amount of the burner, thereby adjusting the air ratio of the burner. In the case where the flow rate adjusting device adjusts the combustible air amount, the flow rate adjusting device is preferably a damper (including a valve). As the structure of the damper, a rotation type that changes the aperture of a flow path with a valve body rotating with respect to a rotation axis, and a slide type can be used, which slides with respect to the cross-sectional opening of a flow path to change the aperture of the flow path.

In the case where the flow rate adjusting device changes a combustible air amount, preferably, the flow rate adjusting device is provided with an air flow path between a blower and fuel supply device, and can also be provided on a suction port side of the blower such as the suction port of the blower.

The motor is preferably device for driving the flow rate adjusting device, which is capable of controlling the opening amount of the flow rate adjusting device in accordance with the driving amount and is capable of adjusting the driving amount per unit time. The motor constitutes a part of "mechanical control device" for controlling the air ratio stably. "Being capable of controlling the opening amount in accordance with a driving amount" refers to the capability of stop controlling the aperture of the flow rate adjustment valve at a particular position if the driving amount is determined. Further, "being capable of adjusting the driving amount per unit time" refers to the capability of adjusting the responsiveness of the position control.

As the motor, preferably, a stepping motor (which can also be called a step motor) can be used, and a gear motor (which can also be called a geared motor), a servo motor, or the like can be used. In the case of the stepping motor, the driving amount is determined based on a driving pulse, and the aperture position of the flow rate adjusting device is moved by opening/closing by the amount in accordance with the number of driving pulses from the reference aperture position, thereby being controlled to be any intended stop position. Further, in the case of the gear motor or the servo motor, the driving amount is a opening/closing driving time, and the aperture position of the flow rate adjusting device is moved by opening/closing by the amount in accordance with the opening/closing driving time from the reference aperture position, thereby being controlled to be any intended stop position.

As the sensor, an oxygen concentration meter can be suitably used, which represents an excess oxygen concentration in an oxygen excess region, and represents, as a negative value, an insufficient oxygen concentration required for burning unburned gas such as carbon monoxide at an air ratio of m = 1.0 in a fuel excess region.

Further, as the sensor, an oxygen concentration sensor and a carbon monoxide concentration sensor can be combined to obtain an air ratio approximately.

Although the sensor is preferably attached on a secondary side of the catalyst, the attachment position is not limited thereto, and the sensor can be attached on a primary side of the catalyst or on a downstream side in the case where an exhaust heat collector is provided on a downstream side of the catalyst.

The air-ratio adjusting device inputs a detected value of the sensor based on a previously stored air ratio control program and controls the driving amount of the motor by feedback, and controls the air ratio to be a set air ratio of 1 so that the concentration of carbon monoxide in the gas on a primary side of the catalyst is substantially equal to or more than a value obtained by adding the concentration of carbon monoxide decreased in the catalyst by the oxidation to the concentration of carbon monoxide decreased in the catalyst by the reduction, or the formula (3) is satisfied.

The air ratio control program is preferably configured by providing a first control band for changing the driving amount (which can be expressed as a time per one driving unit) per unit time of the motor in accordance with the difference between the detected air ratio and the set air ratio and a second control band for setting the driving amount per unit time to be a fixed predetermined value on an outside of the first control band, thereby controlling the driving amount of the motor. This control constitutes the electrical control device for controlling the detected air ratio to be in a range which is set with the set air ratio as a center. Note that the air ratio control program is not limited to this control system, and can perform various PID controls. The control amount in the first control band can be controlled by a formula of a product of the difference between the detected air ratio and the set air ratio, and a set gain. Due to such a control, the set air ratio can be controlled rapidly, and an effect capable of controlling with less overshoot and hunting can be exhibited.

The concentration ratio adjustment by the burner and the water tube group includes a form conducted by elements constituting a gas passage from the burner to the catalyst other than the water tube group and elements included in the gas passage.

Further, in the mechanical control device, a combustible air supply passage can be constituted by a main passage and an auxiliary passage in parallel to the main passage. The device can be constituted to roughly adjust the air flow rate by the operation of the valve body provided in the main passage, and to minutely adjust the air flow rate by the operation of the valve body provided in the auxiliary passage. Further, in the mechanical control device, fuel supply passage can be constituted by a main passage and an auxiliary passage in parallel to the main passage. The device can be constituted to roughly adjust the air flow rate by the operation of the valve body provided in the main passage, and to minutely adjust the air flow rate by the operation of the valve body provided in the auxiliary passage.

The flow rate adjusting device of the air-ratio adjusting device can control the motor of the blower with an inverter. As the inverter, an inverter with a well-known configuration can be used. Even in the case of using the inverter, the air ratio can be controlled with the air ratio control program used in damper control.

(Embodiment Mode 5)

The present invention is not limited to Embodiment Modes 1 to 5 of the boiler, and includes Embodiment Modes 5 to 7 as described below.

Embodiment Mode 5 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; a sensor for detecting an air ratio of the premixed burner; and air-ratio adjusting device for controlling the premixed burner to a set air ratio based on a detected signal of the sensor, in which the premixed burner and the water tube group have characteristics of air ratio-NOx/CO in which concentrations of nitrogen oxides and oxygen on a secondary side of the oxidation catalyst are set to be substantially zero to decrease a concentration of carbon monoxide to substantially zero or a predetermined value or less, when the air ratio is adjusted to the set air ratio by the air-ratio adjusting device.

Embodiment Mode 6 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; a sensor for detecting an air ratio of the premixed burner; and air-ratio adjusting device for controlling the premixed burner to a set air ratio based on a detected signal of the sensor, in which the premixed burner and the water tube group are configured so that a concentration of carbon monoxide in the gas on a primary side of the oxidation catalyst is substantially equal to or more than a value obtained by adding a concentration of carbon monoxide decreased in the oxidation catalyst by the oxidation to a concentration of carbon monoxide decreased in the oxidation catalyst by the reduction, when the air ratio is adjusted to the set air ratio by the air-ratio adjusting device.

Embodiment Mode 7 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; a sensor for detecting an air ratio of the premixed burner; and air-ratio adjusting device for controlling the premixed burner to a set air ratio based on a detected signal of the sensor, in which the premixed burner and the water tube group are configured so that a concentration ratio of the gas before flowing to the oxidation catalyst satisfies the following formula (3), when the air ratio is adjusted to the set air ratio by the air-ratio adjusting device:

$$([NOx] + 2[O_2])/[CO] \leq 2.0 \cdots (3)$$

(in formula (3), [CO], [NOx], and [O_2] respectively represent a concentration of carbon monoxide, a concentration of nitrogen oxides, and a concentration of oxygen, and a condition of [O_2] > 0 is satisfied.)

The boilers in Embodiment Modes 5 to 7 exhibit the actions and effects similar to those in Embodiment 4. This invention includes Embodiment 8 as described below.

(Embodiment Mode 8)

Embodiment Mode 8 includes: a premixed burner for burning a hydrocarbon-containing fuel to generate gas free of hydrocarbon but containing oxygen, nitrogen oxides, and carbon monoxide; a water tube group for absorbing heat from gas generated by the premixed burner; an oxidation catalyst for oxidizing the carbon monoxide contained in the gas after the passage through the water tube group by oxygen and reducing the nitrogen oxides contained in the gas by carbon monoxide; and air-ratio adjusting device for adjusting an air ratio of the premixed burner. The premixed burner and the water tube group are configured so as to have characteristics of air ratio-NOx/CO on a primary side of the oxidation catalyst regarding the gas containing oxygen, nitrogen oxides, and carbon monoxide on a primary side of the oxidation catalyst obtained by adjusting an air ratio in the vicinity of 1. 0 by the air-ratio adjusting device, and the oxidation catalyst is configured so as to have characteristics of air ratio-NOx/CO (secondary characteristics) on a secondary side of the oxidation catalyst obtained by bringing the gas having characteristics of air ratio-NOx/CO (primary characteristics) on the primary side into contact with the oxidation catalyst. The air-ratio adjusting device is set to be a value which is the set air ratio in the NOx/CO decreasing region of the characteristics of air ratio-NOx/CO on the secondary side, and at which a concentration of nitrogen oxides (concentration of emitted NOx) in the secondary characteristics is decreased to be substantially zero. The concentration of nitrogen oxides can be decreased to be substantially zero preferably by controlling the air ratio of the premixed burner to be substantially 1.0. This control is performed preferably by an air ratio on a secondary side of the oxidation catalyst, and can also be performed by the concentration of O_2 on a primary side so that the concentration of oxygen (O_2 concentration) on a primary side of the catalyst capable of satisfying the set air ratio of substantially 1.0 becomes a predetermined concentration as a result of the reaction in the catalyst. The primary characteristics are concentration ratio characteristics by the burner and the water tube group of the present invention, and include characteristics of air ratio-NOx and characteristics of air ratio-CO. Further, the secondary characteristics are the characteristics (catalyst characteristics) by the catalyst, and include characteristics of air ratio-NOx and characteristics of air ratio-CO.

In Embodiment Mode 8, the gas generated on combustion by the burner is subjected to a heat absorbing function in the water tube group to become gas containing oxygen, nitrogen oxides, and carbon monoxide at a predetermined concentration ratio. Then, by changing the air ratio of the burner in a low air ratio region, the primary characteristics that are concentration ratio characteristics by the burner and the water tube group and the secondary characteristics by the characteristics of the catalyst are obtained.

(Embodiment Mode 9)

Embodiment Mode 8 can be expressed by Embodiment Mode 9 as described below of a boiler. Embodiment Mode 9 includes: a premixed burner for burning a hydrocarbon-containing fuel to generate gas free of hydrocarbon but containing oxygen, nitrogen oxides, and carbon monoxide; a water tube group for absorbing heat from gas generated by the premixed burner; a catalyst that is brought into contact with the gas after the passage through the water tube group, and decreases carbon monoxide and does not decrease nitrogen oxides when a concentration ratio of oxygen, nitrogen oxides, and carbon monoxide in gas is in a NOx non-decreasing region and decreases carbon monoxide and nitrogen oxides when the concentration ratio is in a NOx decreasing region; and air-ratio adjusting device for adjusting the ratio of an air amount and/or a fuel amount supplied to the premixed burner. The air-ratio adjusting device adjusts the ratio of an air amount and/or a fuel amount so that the concentration ratio becomes the NOx decreasing region, and the adjustment is configured so that the concentration of nitrogen oxides on a secondary side of the oxidation catalyst becomes substantially zero. The adjustment of concentration ratio of Embodiment Mode 9 includes Adjustment 0 and Adjustment 1. Further, in the adjustment of the concentration ratio, preferably, the concentration of oxygen on a secondary side of the oxidation catalyst is decreased to be substantially zero. Carbon monoxide in the catalyst is decreased by oxidation, and nitrogen oxides are decreased by reduction by carbon monoxide.

Further, in Embodiment Mode 9, preferably, the concentration ratio adjustment by the premixed burner and the water tube group suppresses a concentration of hazardous substances to be generated to a set concentration or less. Here, the hazardous substances (which can also be called a pollutant) are nitrogen oxides and carbon monoxide. The set concentration can be set to be, for example, 300 ppm, in the case where the hazardous substances are nitrogen oxides. More specifically, the concentration of hazardous substances to be generated is suppressed to a set concentration or less by the concentration ratio adjustment, whereby the treatment amount in the oxidation catalyst, i.e., the amount of the catalyst can be decreased. A device for suppressing the gas temperature and suppressing the concentration of nitrogen oxides to be a predetermined value or less is referred to as nitrogen oxide generation suppressing device. The nitrogen oxide generation suppressing device includes a device for cooling gas in a combustion reaction by a water tube group, device for re-circulating exhaust gas, device for adding water or vapor to gas in the combustion reaction, and a combination of a plurality of these devices. The nitrogen oxide generation suppressing device is applicable not only to Embodiment Mode 9 but also to any other embodiment modes.

(Embodiment Mode 10)

Further, the present invention includes Embodiment Mode 10 described below of a boiler. Embodiment Mode 10 is a boiler including: a premixed burner for burning a hydrocarbon-containing fuel to generate gas free of hydrocarbon but containing oxygen, nitrogen oxides, and carbon monoxide; a water tube group for absorbing heat from gas generated by the premixed burner; a catalyst that performs, as main reactions, a first reaction of being brought into contact with gas containing oxygen, nitrogen oxides, and carbon monoxide after the passage through the water tube group, and oxidizing carbon monoxide by oxygen in the gas, and a second reaction of reducing nitrogen oxides by carbon monoxide in the gas; and control device (concentration ratio adjusting device) for adjusting the ratio between combustible air and a fuel of the premixed burner. The catalyst has the following characteristics. Assuming that a concentration ratio among oxygen, nitrogen oxides, and carbon monoxide in gas on a primary side of the catalyst at which concentrations of nitrogen oxides and carbon monoxide on a secondary side becomes substantially zero is a predetermined reference concentration ratio, when the concentration ratio is the predetermined reference concentration ratio, the concentrations of nitrogen oxides and carbon monoxide on the secondary side of the catalyst are set to be substantially zero, and when the concentration of oxygen on the primary side is set to be higher than the reference oxygen concentration corresponding to the predetermined reference concentration ratio, oxygen in a concentration in accordance with the difference between the concentration of oxygen on the primary side and the reference oxygen concentration is detected on the secondary side of the catalyst, and the concentration of carbon monoxide on the secondary side of the catalyst is set to be substantially zero and the concentration of nitrogen oxides is decreased. Further, when the concentration of oxygen on the primary side is set to be lower than the reference oxygen concentration, carbon monoxide at a concentration in accordance with the difference between the concentration of oxygen on the primary side and the reference oxygen concentration is detected on the secondary side of the catalyst, and the concentration of nitrogen oxides on the secondary side of the catalyst is set to be zero and the concentration of carbon monoxide is decreased. The concentration ratio adjusting device is characterized in that it adjusts the ratio between the combustible air amount and the fuel amount of the premixed burner based on the concentration of oxygen on the secondary side of the catalyst, using the characteristics of the catalyst, thereby adjusting the concentration of oxygen on the primary side of the catalyst with respect to the reference oxygen concentration, and decreasing the concentrations of nitrogen oxides and carbon monoxide on the secondary side of the catalyst. This adjustment includes Adjustment 0 and Adjustment 1.

Embodiment Modes 8 and 9 are expressed based the primary characteristics and the secondary characteristics of the premixed burner and water tube group with respect to the air ratio obtained by the concentration of oxygen and/or the concentration of carbon monoxide, etc. on the secondary side of the catalyst. In contrast, Embodiment Mode 10 is expressed based on the primary characteristics and the catalyst characteristics of the premixed burner and the water tube group with respect to the concentration of oxygen on the primary side of the catalyst.

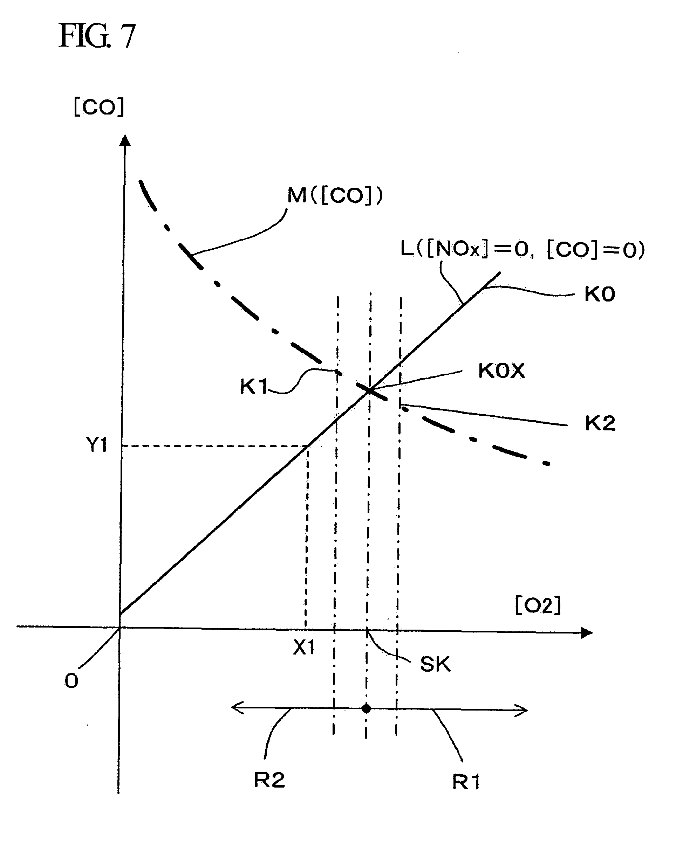

The catalyst characteristics are the following characteristics. More specifically, as shown in a schematic view of FIG. 7, the catalyst characteristics have a characteristic line L (secondary side [NOx] = 0, [CO] = 0 line) of the concentration ratio on the primary side of the catalyst. When the concentration ratio K on the primary side of the catalyst is positioned on the line L, the concentration of nitrogen oxides and the concentration of carbon monoxide on the secondary side of the catalyst become substantially zero. In the line L, the predetermined concentration ratio K in the formula (3) corresponds to 1.0 (K0 = 1.0 in the formula (2)) theoretically. However, as described above, since it has been experimentally confirmed that the concentrations of nitrogen oxides and carbon monoxide on the secondary side of the catalyst can be set to be substantially zero in a range of the concentration ratio K exceeding 1.0 up to 2. 0, the characteristic line L on the secondary side is not limited to the line in FIG. 7.

Then, a concentration ratio K among oxygen, nitrogen oxides, and carbon monoxide at an intersection between a line M of the primary characteristics of the burner and the water tube group and the characteristic line L on the secondary side is assumed to be a predetermined specific reference concentration ratio K0X (hereinafter, referred to as a specific reference concentration ratio). When the concentration ratio K on the primary side of the catalyst is adjusted to the specific reference concentration ratio K0X (Adjustment 0), the concentrations of nitrogen oxides and carbon monoxide on the secondary side of the catalyst are set to be substantially zero. Then, when the concentration of oxygen on the primary side is set to be higher than a reference oxygen concentration SK corresponding to the specific reference concentration ratio K0X, i.e., the concentration of oxygen on the primary side is set to be higher by the air-ratio adjusting device, oxygen at a concentration in accordance with the difference between the concentration of oxygen on the primary side and the reference oxygen concentration is detected on the secondary side of the catalyst, the concentration of nitrogen oxides on the secondary side of the catalyst becomes lower than the concentration of nitrogen oxides on the primary side, and the concentration of carbon monoxide on the secondary side becomes substantially zero. Further, when the concentration of oxygen on a primary side is set to be lower than the specific reference concentration ratio K0X (Adjustment 1), carbon monoxide at a concentration in accordance with the difference between the concentration of oxygen on the primary side and the reference oxygen concentration is detected on the secondary side of the catalyst, the concentration of nitrogen oxides on the secondary side of the catalyst becomes substantially zero, and the concentration of carbon monoxide on the secondary side is decreased.

If those characteristics of the catalyst and the primary characteristics of the premixed burner and the water tube group are used, the concentration of emitted NOx and the concentration of emitted CO can be easily controlled to be substantially zero by controlling the concentration of oxygen and/or the concentration of carbon monoxide on the secondary side of the catalyst to be zero, i.e., by controlling an air ratio to be zero. More specifically, by controlling the concentration of oxygen and/or the concentration of carbon monoxide on the secondary side of the catalyst, energy saving by burning at an air ratio of 1.0 and ultra-low pollution in which the concentration of emitted NOx and the concentration of emitted CO are substantially zero can be realized simultaneously.

Further, by controlling the concentration of oxygen and/or the concentration of carbon monoxide on the secondary aide of the catalyst in the vicinity of zero, the concentration of emitted NOx can be decreased to a value close to zero although it cannot be decreased to be substantially zero.

In Embodiment Modes 1 to 9 as described above, preferably, a feed-water preheater is provided as an exhaust heat recovery unit on the secondary side (wake flow side) of the catalyst, whereby a great amount of heat generated by oxidation of carbon monoxide in the catalyst can be recovered for supplying water. Further, the catalyst is preferably provided in a gas duct of a wake flow of the water tube group so as to avoid the contamination due to the drop of condensed water from the exhaust heat recovery unit, and the catalyst is prevented from being contaminated by condensed water dropping from the exhaust heat recovery unit.

Further, Embodiment Modes 1 to 9 as described above preferably include a second sensor (second sensor) for detecting abnormality of the catalyst or the sensor (first sensor), notification device, and control device for detecting the abnormality based on the detected value of the second sensor, and executing an abnormality time control program for notifying the abnormality by the notification device.

In Embodiment Modes 1 to 9 as described above, when the catalyst loses the original function due to the degradation or the like, a set value or more of carbon monoxide is contained in gas on the secondary side of the catalyst. When the detected value of the second sensor exhibits an abnormality value, the control device determines that the catalyst or the first sensor is abnormal, and notifies the abnormality by the notification device. Due to the notification of abnormality, an administrator and a maintenance operator of a boiler can check the catalyst or the first sensor to perform maintenance such as exchange of the catalyst.

The second sensor detects the abnormality of the catalyst or the first sensor. In the case where the second sensor detects the abnormality of the catalyst, the second sensor is preferably a CO sensor for detecting the increase in a concentration of carbon monoxide on the secondary side of the catalyst. However, the second sensor can be a NOx sensor for detecting the increase in a concentration of nitrogen oxides on the secondary side of the catalyst. Further, two sensors, a CO sensor and a NOx sensor, can constitute the second sensor.

In the case where the second sensor detects the abnormality of the first sensor, the second sensor is set to be a sensor for detecting the same air ratio as that of the first sensor.

The notification device is not particularly limited, as long as it notifies abnormality of the catalyst visually and/or acoustically. Further, the notification device can be configured so as to be attached to a controller constituting the control device or so as to notify abnormality via a communication line at a position away from the combustion apparatus.

The abnormality time control program includes a program for controlling the air ratio to be a second set air ratio λ2 (for example, 1.25) so that the concentration of carbon monoxide on the primary side of the catalyst becomes a second set value equal to or lower than an emission reference value, in order to set the concentration of carbon monoxide on the secondary side of the catalyst to be an emission reference value or less even in the case where the catalyst or the first sensor does not function normally.

The abnormality time control program can be configured as follows. In the case where the second sensor is a sensor for detecting the abnormality of the catalyst, the control device drives the notification device to notify abnormality, and shifts the combustion at the first set air ratio λ1 to the combustion at the second set air ratio λ2, when the detected value of the second sensor exceeds the set value that is a reference value for determining abnormality. The combustion at the second set air ratio λ2 is a hasty operation. However, the concentration of carbon monoxide in gas on the primary side of the catalyst is 300 ppm or less that is an emission reference value, so the concentration of emitted carbon monoxide can be set to be an emission reference value or less even if the catalyst does not function at all.

Further, in the case where the second sensor is a sensor for detecting the abnormality of the first sensor, when the second sensor has a normal value, i.e., detects a set air ratio, whereas the first sensor has an abnormal value, i.e., does not detect the set air ratio, the control device changes the set air ratio. Then, when the first sensor does not detect an air ratio changed by the first sensor, and the second sensor detects the air ratio changed by the second sensor, the control device determines the first sensor to be abnormal, and switches to the air ratio control by the second sensor.

The administrator or the maintenance member of the combustion apparatus performs an exchange and maintenance of the catalyst based on the notification by the notification device, thereby normalizing the function of the catalyst. After that, the combustion at the first set air ratio λ1 is started.

In the above-mentioned embodiment modes, the flow rate adjusting device of the air-ratio adjusting device preferably includes abnormality detection device for detecting the abnormality of itself. When the second sensor detects abnormality, the catalyst, the first sensor, the flow rate adjusting device, and the like can be considered as the cause of the abnormality. The cause of abnormality can be specified easily by providing the abnormality detection device.

[Embodiment 1]

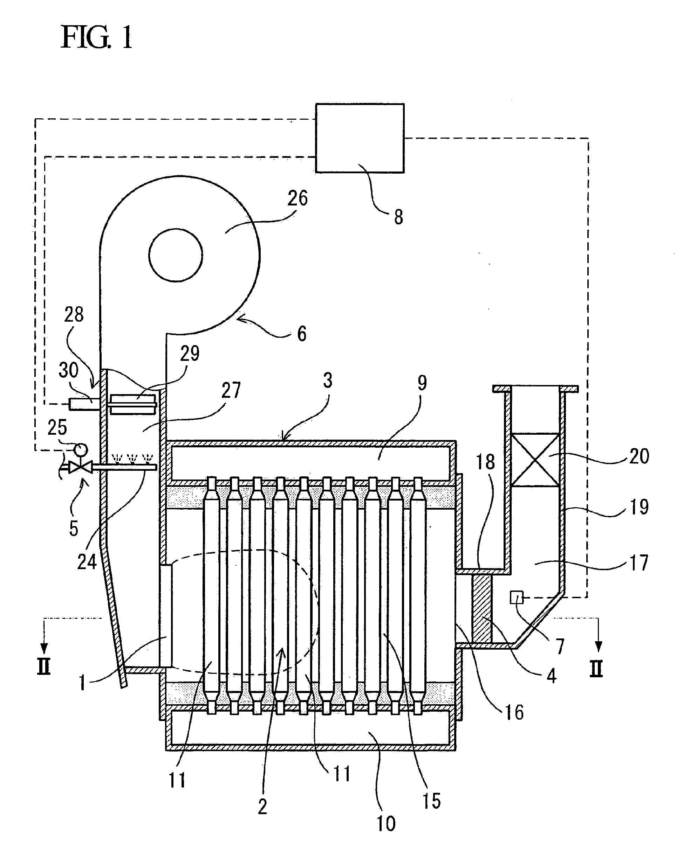

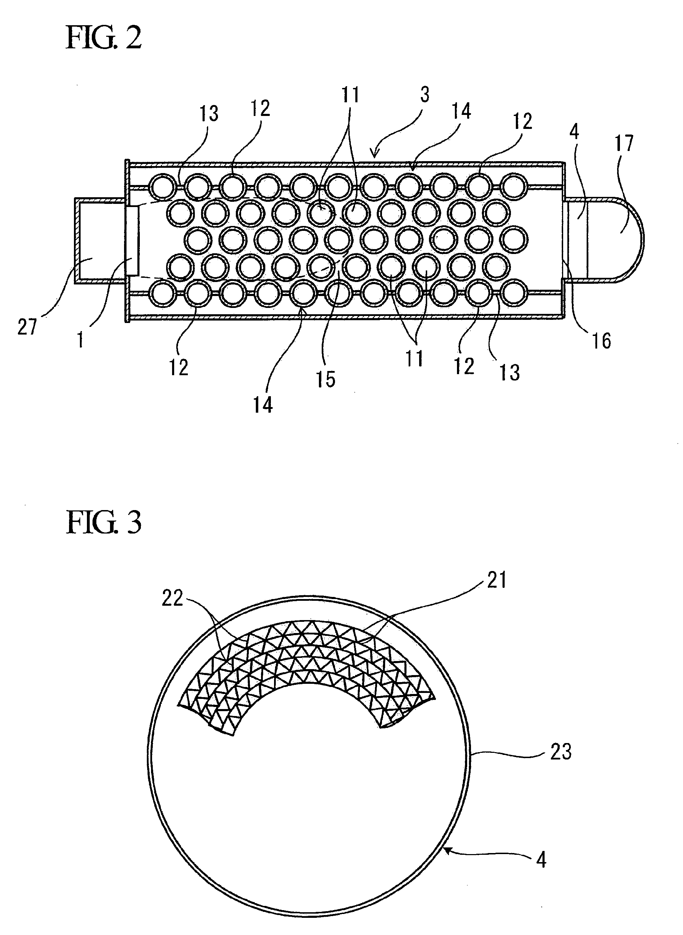

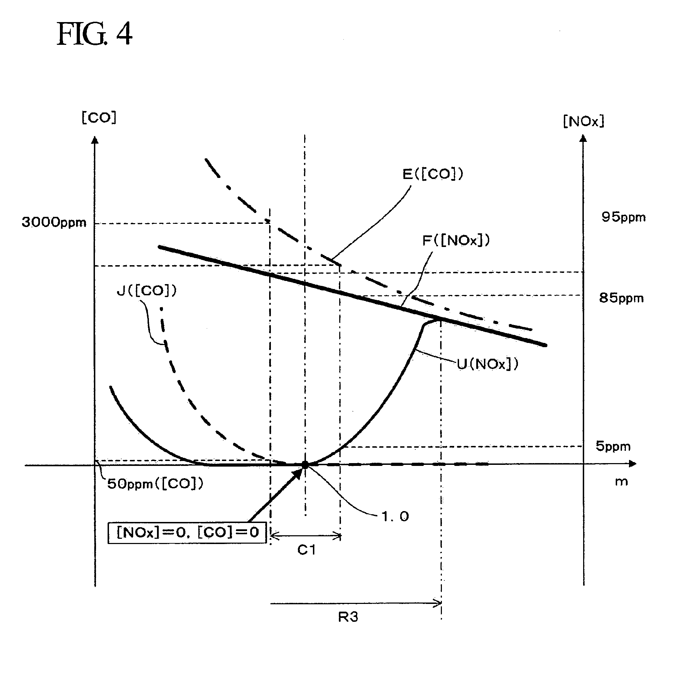

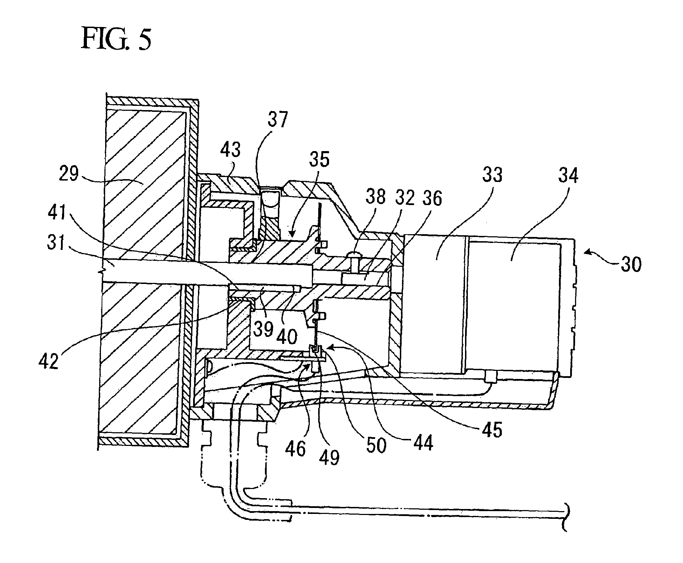

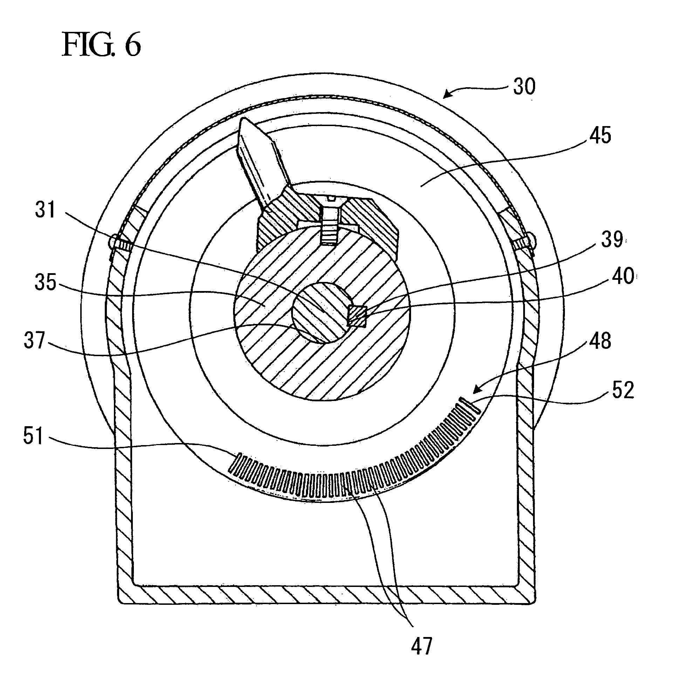

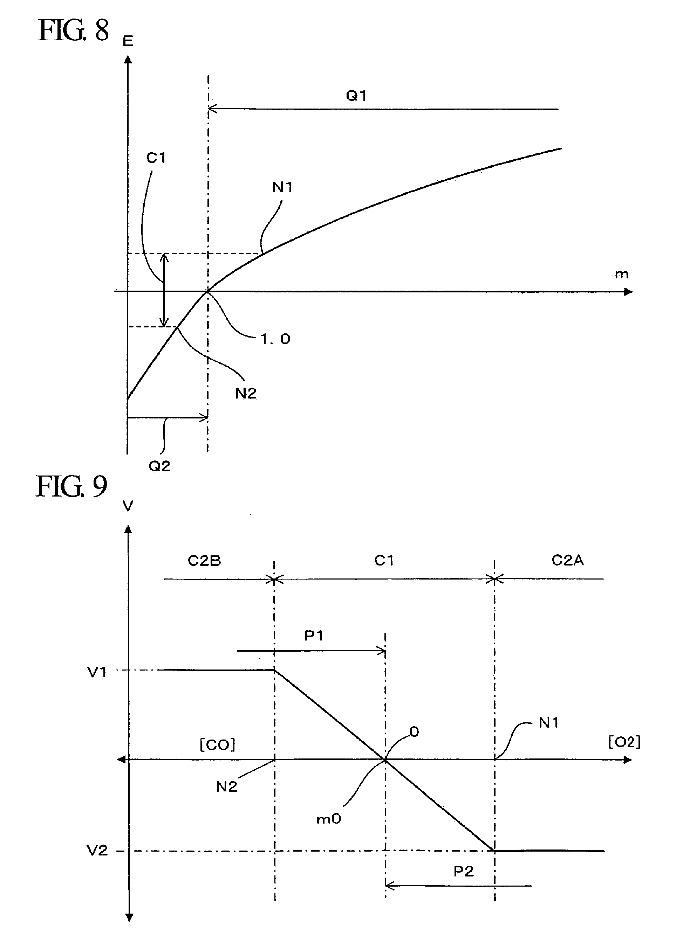

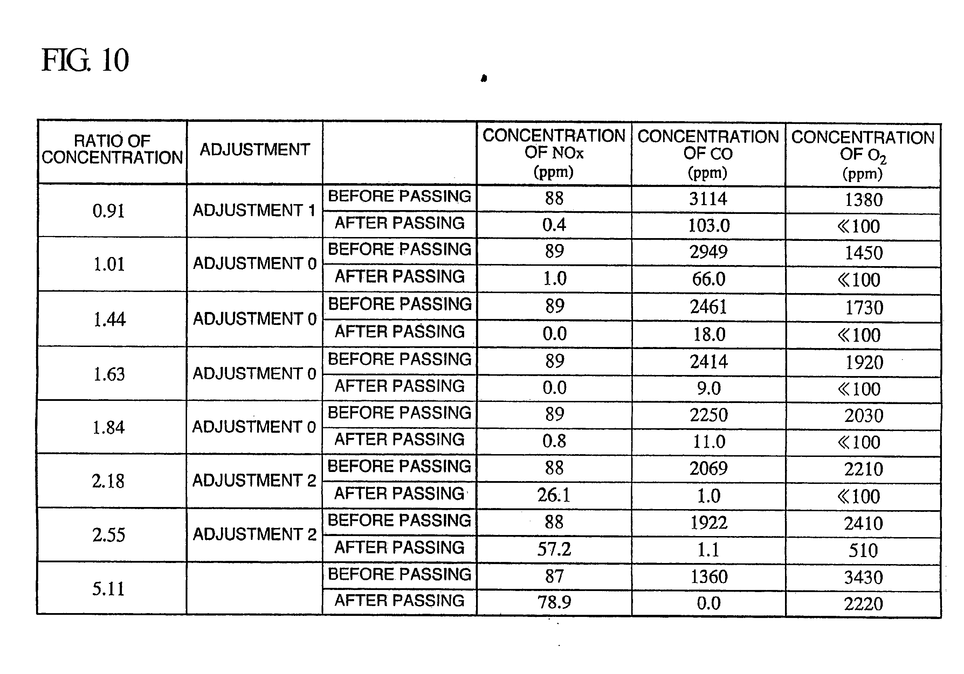

Next, an explanation will be made by referring to the drawings for an embodiment in which the combustion apparatus of the present invention is applied to a steam boiler: FIG. 1 is a longitudinal sectional view for explaining a steam boiler of Embodiment 1; FIG. 2 is a sectional view taken along line II to II in FIG. 1; FIG. 3 is a drawing showing a constitution of major parts when an oxidation catalyst in FIG. 2 is viewed from a direction in which exhaust gas flows; FIG. 4 is a drawing showing the characteristics of air ratio-NOx/CO in Embodiment 1; FIG. 5 is a partial sectional view for explaining a damper position adjusting device of Embodiment 1, which is in operation; FIG. 6 is a partial sectional view for explaining the damper position adjusting device in operation; FIG. 7 is a pattern diagram for explaining the characteristics of a burner and endothermic device and the characteristics of a catalyst in Embodiment 1; FIG. 8 is a drawing for explaining the output characteristics of the sensor of Embodiment 1; FIG. 9 is a drawing for explaining the motor control characteristics in Embodiment 1; and FIG. 10 is a drawing for explaining the NOx and CO decreasing characteristics of Embodiment 1.

At first, an explanation will be made for the steam boiler of Embodiment 1. The steam boiler is provided with a burner 1, a storage water heater body 3 including a heat transfer tube (water tube) group 2 as endothermic device for absorbing the heat of gas generated from the burner 1, an oxidation catalyst (hereinafter sometimes simply referred to as "catalyst") 4 through which gas containing each of oxygen, nitrogen oxides, and carbon monoxide at the predetermined concentration ratios after passing through the heat transfer tube group 2 in contact therewith, thus oxidizing carbon monoxide and also reducing nitrogen oxides, fuel supply device 5 for supplying fuel gas to the burner 1, combustible air supply device 6 for supplying combustible air to the burner 1 to premix fuel with the combustible air, a sensor 7 for detecting the concentration of oxygen downstream from the catalyst 4, and a controller 8 as a boiler controller for inputting signals such as those from the sensor 7 or others to control the fuel supply device 5, the combustible air supply device 6, and others.

The burner 1 is a complete premix-type burner having a flat combustion face (face of ejecting premixed air). The burner 1 is similar in constitution to the burner described in Patent Document 1.

The storage water heater body 3 is provided with an upper header 9 and a lower header 10 to arrange a plurality of inner water tubes 11, 11 ..., which constitute the water tube group 2 between the headers. Then, as shown in FIG. 2, a pair of water tube walls 14, 14 constituted by connecting outer water tubes 12, 12... by using connection members 13, 13... are provided on both ends of the storage water heater body 3 in a longitudinal direction, thereby forming a first gas duct 15 through which gas from the burner 1 passes substantially linearly between these water tube walls 14, 14, the upper header 9 and the lower header 10. The burner 1 is installed on one end of the first gas duct 15, and a second gas duct (smoke duct) 17 through which exhaust gas passes is connected to the other end thereof, which is an exhaust gas outlet 16. The burner 1 and the storage water heater body 3 used in Embodiment 1 are known.

The second gas duct 17 includes a horizontal part 18 and a perpendicular part 19, and the catalyst 4 is loaded at the horizontal part 18. A feed-water preheater 20, as an exhaust heat recovery system, is attached to the perpendicular part 19 so as to be positioned downstream from the catalyst 4, and the sensor 7 is placed between the catalyst 4 and the feed-water preheater 20.

The burner 1 and constituents from the burner 1 including the water tube group 2 to the catalyst 4 (in particular, the burner 1 and the water tube group 2 are major parts) are provided with functions to adjust the concentration ratio K in gas on the primary side of the catalyst 4 to the predetermined concentration ratios K0 and K1. In other words, those constituents are structured so that there are provided the characteristics of air ratio-NOx/CO as shown in FIG. 4 when adjustment is made to a set air ratio by air-ratio adjusting device 28 to be described later. The characteristics of air ratio-NOx/CO are characteristics of air ratio-NOx/CO on the primary side of the catalyst 4, which are obtained when the air-ratio adjusting device 28 is controlled to conduct combustion at a varied air ratio, (hereinafter, referred to as primary characteristics). Then, the catalyst 4 has characteristics of air ratio-NOx/CO on the secondary side of the catalyst 4, which are obtained by allowing the gas having the primary characteristics to be in contact with the catalyst 4, (hereinafter, referred to as secondary characteristics). The primary characteristics are the characteristics of constituents from the burner 1 to the catalyst 4, whereas the secondary characteristics are the concentration ratio characteristics of the catalyst 4. The primary characteristics are to decrease the concentration of NOx and that of carbon monoxide on the secondary side of the catalyst 4 to substantially zero when the air ratio is adjusted to 1.0. In this instance, the predetermined reference concentration ratio K0 in gas on the primary side of the catalyst 4 is given as a specific reference concentration ratio (hereinafter, referred to as a specific reference concentration ratio) K0X (refer to FIG. 7).

FIG. 4 is a pattern diagram in which the low air ratio region Z2 given in FIG. 17 is elongated, although the vertical axis and the lateral axis are differently scaled. In FIG. 4, a first line (characteristic line) E indicates the concentration of CO on the primary side of the catalyst 4, and a second line F indicates the concentration of NOx on the primary side. Further, a third line J indicates the concentration of CO on the secondary side of the catalyst 4, having such characteristics that the concentration of CO is decreased to substantially zero at an air ratio 1.0 or more and the concentration is abruptly increased as the air ratio is lower than 1.0. Still further, a fourth line U indicates the concentration of NOx on the secondary side of the catalyst 4, having such characteristics that the concentration of NOx is decreased to substantially zero in a predetermined region having the air ratio of 1.0 or lower, and the concentration is increased substantially from zero, when the air ratio is in excess of 1.0 and soon equal to the concentration on the primary side of the catalyst 4. A region equal to or lower than an air ratio at which the concentration of NOx on the secondary side of the catalyst 4 is equal to the concentration on the primary side is referred to as a NOx/CO decreasing region. A lower limit of the NOx/CO decreasing region is given as an air ratio at which the concentration of CO on the secondary side of the catalyst 4 is 300 ppm (CO exhaust standards in Japan). Characteristics of air ratio-NOx/CO of the low air ratio region are new characteristics, which have not yet been subjected to research.

The catalyst 4 is provided with functions of oxidizing carbon monoxide contained in the gas free of hydrocarbons after passing through the water tube group 2 (first reaction) and also reducing nitrogen oxides (second reaction). In Embodiment 1, used is a catalyst in which a catalyst activating substance is platinum. As already having been explained in the section of "Best Mode for carrying out the Invention," when theoretical consideration is given on the basis of experimental results, there may be a first reaction in which the gas satisfying formula (3) of the concentration ratio is in contact with the catalyst activating substance of the catalyst 4 to oxidize mainly carbon monoxide and a second reaction in which nitrogen oxides are reduced by carbon monoxide. Whether the first reaction proceeds or not will be determined depending on the concentration of oxygen. In the catalyst 4, it is considered that the first reaction is predominant over the second reaction.

The catalyst 4 will be more specifically explained. The catalyst has a structure as shown in FIG. 3 and is formed as follows, for example. Many fine irregularities are formed on the respective surfaces of a flat plate 21 and a corrugated plate 22, both of which are made of stainless steel, as the matrix, thereby holding a catalyst activating substance (not illustrated) on the surfaces. Then, the flat plate 21 having a predetermined width is placed on the corrugated plate 22, which are then wound helically and formed into a roll shape. A side plate 23 is used to enclose and fix the thus roll-shaped substance to form the catalyst. Platinum is used as the catalyst activating substance. In addition, FIG. 3 shows the flat plate 21 and the corrugated plate 22 only partially.

The catalyst 4 is active in oxidation in a low temperature region and placed at the horizontal part 18, which is on its way to the second gas duct 17, that is, at a position where exhaust gas temperature is approximately in a range of 100°C to 350°C, and preferably 150°C to 350°C. Then, the catalyst 4 is removably attached to the second gas duct 17 so as to be exchanged when deteriorated in performance.

The fuel supply device 5 is constituted so as to include a fuel gas supply tube 24 and a flow rate adjusting valve 25 installed on the fuel gas supply tube 24 to adjust a fuel flow rate. The flow rate adjusting valve 25 is provided with functions of controlling fuel supply at a high combustion flow rate and a low combustion flow rate.

The combustible air supply device 6 is constituted so as to include a blower 26, an air supply duct 27 for supplying combustible air from the blower 26 to the burner 1, and air-ratio adjusting device 28 for adjusting an air ratio of the burner 1 by adjusting the amount of combustible air flowing through the air supply duct 27. The fuel gas supply tube 24 is connected inside the air supply duct 27 so as to eject fuel gas.

The air-ratio adjusting device 28 is constituted so as to include a damper 29 as flow rate adjusting device for adjusting an aperture (cross-sectional area of the flow channel) of the air supply duct 27, a damper position adjusting device 30 for adjusting an aperture position of the damper 29, and the controller 8 for controlling the operation of the damper position adjusting device 30.

The damper position adjusting device 30 is, as shown in FIG. 5, provided with a driving shaft 32 removably connected to a rotating shaft 31 of the damper 29. The driving shaft 32 can be rotated by a motor 34 via a reduction gear 33. The motor 34 includes any motor freely adjustable for rotation position and stop position. In the present embodiment, a stepping motor (pulse motor) is used.

The driving shaft 32 is connected to the rotating shaft 31 of the damper 29 via a coupling 35, by which it can be rotated substantially coaxially in an integral manner. The coupling 35 is formed in a stepped cylindrical shape, the central part of which is provided with a minor diameter hole 36 and a major diameter hole 37, which have penetrated axially. The driving shaft 32 is inserted into the minor diameter hole 36, and the driving shaft 32 is integrally fixed to the coupling 35 by a fitting screw 38. The rotating shaft 31 of the damper 29 can be inserted into the major diameter hole 37, and the rotating shaft 31 can be integrally rotated via a key 39 together with the coupling 35. Therefore, key grooves 40 and 41 are formed on the rotating shaft 31 and the major diameter hole 37 of the coupling 35, respectively.

The above-mentioned coupling 35 is retained in an external case 43 of the damper position adjusting device 30 so as to rotate freely in a state that one end thereof is inserted into the driving shaft 32, with the other end inserted via a bearing 42. The external case 43 is constituted in such a manner that the reduction gear 33 and the motor 34 are retained on one end thereof and the coupling 35 and an abnormal rotation detecting device 44 are contained therein hermetically on the other end thereof in a state that the key groove 41-equipped major diameter hole 37 of the coupling 35 is exposed.

The abnormal rotation detecting device 44 is provided with a plate to be detected 45 and a detector 46. The plate to be detected 45 is extended radially outwardly and fixed to a stepped portion at the center of the coupling 35 in an axial direction. The plate to be detected 45 is installed so as to be coaxial with the coupling 35 and the driving shaft 32. A slit forming region 48 having many slits 47, 47... equally spaced in a peripheral direction is installed partially at an outer periphery of the plate to be detected 45. In the present embodiment, the slit forming region 48 is installed only in a quarter of a circular arc (90 degrees). Each of the slits 47 formed at the slit forming region 48 is identical in shape and size. In the present embodiment, narrow and long rectangular grooves along the plate to be detected 45 in the radial direction are punched peripherally at equal intervals.

The detector 4 6 for detecting the slit 47 is fixed to the external case 43. The detector 46 is composed of a transmission-type photo interrupter and installed in such a manner that an outer periphery of the plate to be detected 45 is placed between a light emitting device 49 and a light receiving device 50. The plate to be detected 45 is placed between the light emitting device 49 and the light receiving device 50 of the detector 46, thereby the presence or absence of light reception from the light emitting device 49 by the light receiving device 50 is switched by whether or not the slit 47 on the plate to be detected 45 is arranged at a position corresponding to the detector 46 (position corresponding to a light path from the light emitting device 49 to the light receiving device 50). Thereby, it is possible to detect an aperture position of the damper 29.

The damper position adjusting device 30 is positioned so that the damper 29 keeps the air supply duct 27 fully closed in a state that a slit 51 at the clockwise end of the slit forming region 48 shown in FIG. 6 is placed at a position corresponding to the detector 46 and attached to the rotating shaft 31 of the damper 29.

Then, the slit forming region 48 is formed only at a portion corresponding to a quarter of the plate to be detected 45, therefore, in a state that the slit 51 at the clockwise end of the slit forming region 48 is placed at a position corresponding to the detector 46, the damper 29 keeps the air supply duct 27 fully closed as described above. On the other hand, in a state that a slit 52 at the counter-clockwise end of the slit forming region 48 is arranged at a position corresponding to the detector 46, the damper 29 keeps the air supply duct 27 fully opened.

The damper position adjusting device 30 is constituted so that the motor 34 and the detector 46 are connected to the controller 8, and being able to control the rotation of the motor 34, while monitoring an abnormal rotation of the damper 29. More specifically, in order to control the motor 34, the damper position adjusting device 30 is provided with a circuit for preparing control signals including driving pulse to the motor 34 and able to output the thus prepared control signal to the motor 34. Thereby, the motor 34 is arbitrarily controlled for the rotation angle, depending on normal rotation or reverse rotation and driving amount, that is, the number of driving pulses. Further, the motor 34 can change the driving pulse in interval (feeding velocity), thereby making it possible to control the rotation speed.

In controlling an actual opening and closing of the damper 29, the controller 8 at first operates to detect an original point so that a fully closed position of the damper 29 can be given as the original point. First, in FIG. 5, the plate to be detected 45 is rotated in a counter-clockwise direction. On the assumption that the detector 46 is at present arranged inside the slit forming region 48 of the plate to be detected 45, the detector 46 detects the slit 47 regularly in accordance with the rotation of the plate to be detected 45. Therefore, the detected pulse is output to the controller 8 as a detection signal. Then, the plate to be detected 45 is rotated until the detector 46 is placed outside the slit forming region 48, thereby no pulse is detected. If no pulse is detected within a predetermined time, the controller 8 recognizes that the detector 46 is outside the slit forming region 48, switching the rotating direction to a reverse direction. In other words, in the present embodiment, the original point is defined as a position at which the plate to be detected 45 is rotated reversely in a clockwise direction to detect the first pulse (slit 51 at the clockwise end). Confirmation of the original point by the clockwise rotation is made at a lower speed than the counter-clockwise rotation before the rotating direction is switched.

Since the thus detected original point corresponds to a fully closed position of the damper 29, the controller 8 outputs a driving signal to the motor 34 on the basis of this state, thus making it possible to control the opening and closing of the damper 29. If the controller 8 drives the motor 34 to open or close the damper 29, a detection signal of the slit 47 is obtained as a pulse from the detector 46 accordingly. Therefore, the controller 8 is able to monitor an abnormal rotation of the damper 29 by comparing a detection signal from the detector 46 with a control signal to the motor 34. Specifically, a control signal composed of driving pulse to the motor 34 is compared with a detection signal composed of detection pulse of the slit 47 by the detector 46, thereby monitoring the presence or absence of abnormal rotation.

For example, where no detection pulse is detected from the detector 46 despite the fact that a driving pulse has been sent to the motor 34, the controller 8 determines it to be an abnormal rotation. In this instance, the detection pulse from the detector 46 is usually different in frequency from driving pulse to the motor 34. Therefore, control is obtained, with the difference taken into account. For example, such control is obtained that the abnormal rotation is determined only in a case where no pulse of detection signal is detected at all even after the elapse of a predetermined pulse of a driving signal. The controller 8 performs a notification operation of the abnormal rotation and halts the combustion upon determination of the abnormal rotation. In contrast, the abnormal rotation can also be detected in a case where any pulse is detected by the detector 46, despite the fact that no driving pulse has been sent to the motor 34.

The controller 8 is constituted so as to control the motor 34 by referring to a previously stored air ratio control program based on signals detected by the sensor 7 in such a manner that an air ratio of the burner 1 will be a set air ratio (first control condition) and also a concentration ratio K of the gas on the primary side of the catalyst 4 satisfies the following formula (3) at this set air ratio (second control condition).

$$([NOx] + 2[O_2]) \; / \; [CO] \leq 2.0 \cdots (3)$$

(in the formula (3), [CO], [NOx], and [O_2] represent the concentrations of carbon monoxide, nitrogen oxides, and oxygen, respectively, and satisfying the condition of $[O_2] > 0$).

In Embodiment 1, it is the first control condition that gives a direct control. Therefore, the embodiment is constituted so that the first control condition is satisfied, by which the second control condition is automatically satisfied. This will be explained hereinafter by referring to FIG. 4 and FIG. 7.

The characteristics of air ratio-NOx/CO given in FIG. 4 are expressed based on the primary characteristics of constituents including the burner 1 and the water tube group 2 as well as the secondary characteristics of the catalyst 4. In FIG. 7, they are expressed based on the primary characteristics of the constituents with respect to the concentration of oxygen on the primary side of the catalyst 4 and the characteristics of the catalyst 4.

As shown in FIG. 7, the characteristics of the catalyst 4 are expressed by a fifth line L ([NOx] on the secondary side = 0, [CO] = 0 line) related to the predetermined reference concentration ratio K0 on the primary side of the catalyst 4. The fifth line L is a line in which the concentration of nitrogen oxides and that of carbon monoxide on the secondary side of the catalyst 4 are decreased to substantially zero when the concentration ratio K on the primary side of the catalyst 4 is positioned (placed) on the line, specifically, a line, which satisfies the predetermined reference concentration ratio K0. The fifth line L corresponds to a case where the predetermined concentration ratio of formula (3) is 1. In other words, the fifth line L is a line satisfying the following formula (3A).

$$[NOx] + 2[O_2] = [CO] \cdots (3A)$$

In this instance, as shown in FIG. 10, [NOx] is approximately from 1/30 to 1/50 of [CO] in concentration. Thus, in FIG. 7, NOx concentration characteristics with respect to the concentration of oxygen are omitted, and [NOx] of formula (3A) can be negligible. Where the concentration of oxygen on the primary side is X1 on the fifth line L, the concentration of carbon monoxide on the primary side Y1 will be Y1 = 2X1 + [NOx]. In addition, since confirmation has been made for the predetermined reference concentration ratio K0, which decreases the concentration of nitrogen oxides and that of carbon monoxide on the secondary side of the catalyst 4 to substantially zero in a range of the concentration ratio K exceeding 1.0 up to 2.0, the fifth line L is not limited to the line L shown in the drawing but may include any line satisfying formula (2).

Then, a predetermined reference concentration ratio K0 of oxygen, nitrogen oxides, and carbon monoxide at a point at which a sixth line M indicating the primary characteristic curve of the burner 1 and the water tube group 2 intersects with the fifth line L is the specific reference concentration ratio K0X. Where the concentration ratio K on the primary side is given as the specific reference concentration ratio K0X, the catalyst 4 has such characteristics that the concentration of nitrogen oxides and that of carbon monoxide on the secondary side of the catalyst 4 are decreased to substantially zero. The adjustment to the reference concentration ratio K0X corresponds to Adjustment 0 of the present invention.

Then, the catalyst 4 has such characteristics that when the concentration of oxygen on the primary side is made higher than the reference oxygen concentration SK corresponding to the specific reference concentration ratio K0X, oxygen is detected on the secondary side of the catalyst 4 in a concentration depending on a difference between the concentration of oxygen on the primary side and the reference oxygen concentration, the concentration of carbon monoxide on the secondary side of the catalyst 4 is decreased to substantially zero, and the concentration of nitrogen oxides on the secondary side of the catalyst 4 is decreased to a greater extent than the concentration of nitrogen oxides on the primary side by reduction reaction. A region characterized in that oxygen is detected on the secondary side of the catalyst 4 and the concentration of nitrogen oxides is decreased to a greater extent than the concentration of nitrogen oxides on the primary side is referred to as a secondary NOx leakage region R1. In the secondary NOx leakage region R1, an air ratio of the burner 1 is in excess of 1.0.

The catalyst 4 also has such characteristics that when the concentration of oxygen on the primary side is lower than the reference oxygen concentration SK, carbon monoxide is detected on the secondary side of the catalyst 4 in a concentration depending on a difference between the concentration of oxygen on the primary side and the reference oxygen concentration SK, and the concentration of nitrogen oxides on the secondary side of the catalyst 4 is decreased to substantially zero in a predetermined range. A region characterized in that carbon monoxide is detected on the secondary side of the catalyst 4 and the concentration of nitrogen oxides is decreased to substantially zero is referred to as a secondary CO leakage region R2. The secondary CO leakage region R2 is a region, which realizes the Adjustment 1 of the present invention, and an air ratio of the burner 1 is less than 1.0. The air ratio of the burner 1 is set in a range free of hydrocarbons but containing oxygen on the primary side of the catalyst 4, where it is set to less than 1.0. A region, which combines the secondary NOx leakage region R1 with the secondary CO leakage region R2, is referred to as a NOx/CO decreasing region R3.

The above-mentioned characteristics of the catalyst 4 shown in FIG. 7 are in agreement with the characteristics of air ratio-NOx/CO shown in FIG. 4. As apparent from FIG. 7, when the concentration of oxygen and/or that of the carbon monoxide on the secondary side of the catalyst 4 are/is detected and the air-ratio adjusting device 28 is controlled in such a manner that the concentration of oxygen and/or that of carbon monoxide are/is decreased to zero, the concentration ratio K on the primary side of the catalyst 4 is controlled to the specific reference concentration ratio K0X, and the concentration of nitrogen oxides and that of carbon monoxide on the secondary side of the catalyst 4 can be decreased to substantially zero. Thus, the first control condition is satisfied, by which the second control condition is also to be satisfied.

Failure to satisfy the first control condition would result in the generation of unburned combustibles such as hydrocarbons. In this case, energy loss would be caused, and the catalyst 4 would be unable to attain an effective decrease in NOx.

The second control condition is necessary in decreasing the concentration of emitted nitrogen oxides to substantially zero. It has been found by experiments and theoretical consideration that in order to decrease the concentration of nitrogen oxides and that of carbon monoxide on the secondary side of the catalyst 4 to substantially zero, a concentration ratio K, which gives ([NOx] + 2[$O_2$]) / [CO] may be approximately 1.0 by referring to the first reaction and the second reaction. It has been, however, confirmed that the concentration of emitted nitrogen oxides can be decreased to substantially zero even at the concentration ratio K of 1 or higher, that is, from 1.0 to 2.0.

Used as the sensor 7 is a zirconia type air-fuel ratio sensor which has a resolution of emitted oxygen concentration of 50 ppm and which is excellent in responsiveness, that is, having a response time of 2 sec or less. As shown in FIG. 8, output characteristics of the sensor 7 are those in which an output E is given as an output related to the concentration of oxygen on the positive side and as an output related to the concentration of carbon monoxide or others on the negative side. In other words, an air ratio m is calculated by referring to the concentration of oxygen (oxygen excess region) and the concentration of carbon monoxide (fuel excess region) or the like to be determined, thus obtaining an output of electric current or voltage corresponding to the air ratio m. In FIG. 8, Q1 indicates an oxygen concentration detecting zone, and Q2 indicates a carbon monoxide concentration detecting zone.

Then, the air ratio control program gives control on the basis of signals output by the sensor 7 in such a manner that an air ratio m of the burner will be the reference set air ratio m0. Specifically, the program is constituted as follows. That is, as shown in FIG. 9, the program includes such control procedures that a first control zone C1 at which a feeding velocity V of the motor 34 (driving amount per unit time) is changed depending on a difference between an output value E from the sensor 7 and a set value corresponding to the set air ratio m0, and second control zones C2A and C2B at which the feeding velocity V is divided into a first set value V1 and a second set value V2 outside the first control zone C1 are provided to control a driving amount of the motor 34. In FIG. 9, P1 indicates a damper opened region, and P2 indicates a damper closed region.

The first control zone C1 is set by the concentration of oxygen N1 (for example, 100 ppm) and the concentration of carbon monoxide or others N2 (for example, 50 ppm), and controlled so that an air ratio will be a set air value m0, which is substantially 1, (corresponding to the reference oxygen concentration SK).

A feeding velocity V in the first control zone C1 can be calculated by the following formula (4). The feeding velocity V is a driving amount per unit time. A rotating angle in Step 1 of the motor 34 of Embodiment 1 is 0.075 degrees, which corresponds to change in approximately 30 ppm in terms of $O_2$.

$$V = K \times \Delta X \cdots (4)$$

where K represents a gain, and $\Delta X$ represents a difference between the output value of the sensor 7 and the set value.

Next, an explanation will be given for motions of the thus constituted steam boiler. First, combustible air (ambient air) supplied from the blower 26 is premixed with fuel gas supplied from the fuel gas supply tube 24 inside the air supply duct 27. The thus premixed air is ejected from the burner 1 to the first gas duct 15 inside the storage water heater body 3. The premixed air is ignited by ignition device (not illustrated) to burn. This burning is conducted at a low air ratio close to 1.0.

The gas generated in accordance with this burning is in contact with an upstream water tube group 2 and cooled. Thereafter, it is treated endothermically through heat exchange with a downstream water tube group 2 to yield gas at approximately 100°C to 350°C. The gas free of hydrocarbons but containing oxygen, nitrogen oxides, and carbon monoxide is treated by the catalyst 4 and emitted as exhaust gas into the atmosphere from the second gas duct 17, after the concentrations of nitrogen oxides and that of carbon monoxide are decreased to substantially zero.

Next, an explanation will be made for an air ratio control by the air-ratio adjusting device 28. The boiler used in the present embodiment is operated by switching high combustion to low combustion. Therefore, the damper 29 is positioned by selecting a high combustible airflow position or a low combustible airflow position.

The damper 29 is adjusted for position by the damper position adjusting device 30 on the basis of instructions from the controller 8. In other words, the controller 8 inputs a signal for selecting the high combustion or the low combustion and an output value corresponding to an air ratio detected by the sensor 7 to output a signal for driving the motor 34, thereby adjusting an aperture position of the damper 29. An aperture position set for the damper 29, which is used as a set value corresponding to each reference set air ratio m0 on high combustion or low combustion, is stored at the controller 8 as an initial value for each pulse number from an original point.

First, an explanation will be given for control on high combustion. The controller 8 determines whether the present aperture position of the damper 29 is on the opening side (the side to be controlled in a closing direction) with respect to the set aperture position or on the closing side (the side to be controlled in an opening direction) and also calculates the driving pulse number of the motor 34. It also determines whether the output value belongs to the first control zone C1 or the second control zones C2A and C2B in FIG. 9.

Where the output value belongs to the second control zone C2A, the motor 34 is driven at the first set feeding velocity V2 and also at a calculated driving pulse to close the damper 29 at a high velocity. Where it belongs to the second control zone C2B, the motor 34 is driven at the second set feeding velocity V1 and also at a calculated driving pulse to open the damper 29 at a high velocity. Therefore, where the output value is relatively distant from a set value corresponding to the reference set air ratio m0, an output value corresponding to a detected air ratio is controlled at a high velocity so as to come closer to a set value corresponding to the reference set air ratio m0, thus making it possible to give air ratio control excellent in responsiveness.

Further, where the output value belongs to the first control zone C1, a feeding velocity of the motor 34 is calculated based on formula (4) after determination of a rotational direction, and the motor 34 is driven based on the thus calculated feeding velocity and the calculated driving pulse. The control at the first control zone C1 is made at a higher feeding velocity as the output value is further distant from a set value corresponding to the reference set air ratio m0. Owing to the above-mentioned control, it is possible to smoothly bring the value closer to a set value corresponding to a target reference set air ratio m0. Further, a stepping motor capable of securing the control of a rotational position is used and a feeding velocity is controlled so as to slow down as an output value corresponding to the detected air ratio comes closer to a set value corresponding to the set air ratio m0, thus making it possible to suppress overshooting and hunting of the air ratio in the vicinity of a set value corresponding to the reference set air ratio m0.

The air ratio is controlled as described above, by which an air ratio of the burner 1 will be a low air ratio close to 1.0 and the concentration ratio of gas on the primary side of the catalyst 4 is controlled so as to change to a less extent, thus stably satisfying formula (2). As a result, the concentration of nitrogen oxides on the secondary side of the catalyst 4 can be decreased to substantially zero and that of carbon monoxide can also be decreased to substantially zero. Where a set air ratio m0 is made less than 1. 0, the concentration of nitrogen oxides on the secondary side can be decreased to substantially zero and that of carbon monoxide can be also decreased to a value equal to or lower than a predetermined value in a range of practical values.

(Experiment 1)

An explanation will be given for the result of an experiment conducted under the following conditions, that is, a storage water heater body 3 having a capacity of evaporation per unit time of 800 kg (storage water heater body with the production type of SQ-800 manufactured by the applicant) was assembled into a premixed burner 1 to conduct combustion at 45.2 $m^3N/h$, and a catalyst with a volume of 10 L and an inner diameter of 360 mm was prepared in which Pt was held therein as a catalyst activating substance at 2.0 g/L. Where the reference set air ratio m0 was given as 1, the concentration of carbon monoxide, that of nitrogen oxides, and that of oxygen on the primary side of the catalyst 4 (before passage through the catalyst 4) were adjusted to 2,295 ppm, 94 ppm, and 1,655 ppm, respectively, in terms of an average value for 10 minutes, and those on the secondary side of the catalyst 4 (after passage through the catalyst 4) were adjusted to less than 13 ppm, 0.3 ppm, and 100 ppm, respectively, in terms of an average value for 10 minutes. In this instance, the concentration of oxygen on the secondary side of the catalyst 4, 100 ppm, was a detection limit of oxygen concentration. Further, temperatures of gas before and after the catalyst 4 were 302°C and 327°C, respectively. In the present Experiment 1 as well as the following Experiments 2 and 3, the catalyst 4 was placed slightly upstream from the feed-water preheater 20, and measurement instruments were placed before and after the catalyst 4. The respective concentrations and temperatures of gas after passage through the catalyst 4 were measured by using an instrument (PG-250) manufactured by Horiba Ltd., and the respective concentrations before passage through the catalyst 4 were measured by using an instrument (COPA-2000) manufactured by Horiba Ltd. As a matter of course, hardly any change may be found in the measurement concentration value where the catalyst 4 is arranged in the position shown in FIG. 1.

(Experiment 2)

FIG. 10 shows values at each concentration ratio K at the concentration of carbon monoxide, that of nitrogen oxides, and that of oxygen obtained in a case where the same burner 1 and the storage water heater body 3 as those of Experiment 1 were used to conduct combustion at the same rate as that of Experiment 1, and a catalyst was used with a volume of 10 L and an inner diameter of 360 mm was prepared in which Pd was held therein as a catalyst activating substance at 2.0 g/L. In this instance, the concentration of oxygen after passage through the catalyst was measured by the same oxygen concentration sensor as that used in Experiment 1 and indicated as 100 ppm, even when the concentration was actually 100 ppm or less. Temperatures of gas before and after the catalyst 4 were in the ranges of approximately 323°C to 325°C and approximately 344°C to 346°C, respectively.

According to Embodiment 1, damper position adjusting device (air-ratio adjusting device) 30 for adjusting the ratio of combustible air to fuel is used to control the air ratio to 1.0, thus making it possible to adjust the concentration ratio of oxygen, nitrogen oxides, and carbon monoxide on the primary side of the catalyst 4 to the specific reference concentration ratio K0X (Adjustment 0) and also decrease the concentration of emitted NOx and that of emitted CO to substantially zero. Therefore, as compared with technologies for decreasing NOx by addition of water/steam and those for decreasing NOx by use of a denitration agent, the present invention is able to decrease NOx and CO in a simple constitution in which air-ratio adjusting device and a catalyst are used.

Further, since the air ratio is set to substantially 1.0, an energy-saving operation can be performed. Incidentally, an ordinary boiler operated at oxygen concentration of 4% (air ratio of approximately 1.235) is compared with that operated at an oxygen concentration of 0% (air ratio of approximately 1.0) to find that the boiler efficiency is increasedapproximatelyby 1 to 2%. Nowadays, when measures are required for combating global warming, an increase in boiler efficiency can make a great contribution to industries.

Further, the sensor 7 is installed on the secondary side of the catalyst 4 to control an air ratio, thus making it possible to obtain a stable control, as compared with a case where the sensor is installed on the primary side of the catalyst 4 to control the air ratio. The air ratio is also controlled at a resolution of oxygen concentration of 100 ppm or lower, thus making it possible to obtain air ratio control responsively and stably in a region great in the amount of CO and high in the CO increasing rate in characteristics of air ratio-CO.

Further, according to Embodiment 1, since the concentration of emitted nitrogen oxides can be set to be substantially zero by the catalyst 4, the corrosion of the feed-water preheater 20 by the nitrogen oxides canbe suppressed. Then, sulfur oxides are hardly contained in generated gas by using the burner 1 as a premixed gas burner, the feed-water preheater 20 is corroded less by sulfuric acid, and in addition, the corrosion by nitric acid is suppressed by the catalyst 4. Consequently, a boiler in which the feed-water preheater 20 is corroded less by exhaust gas can be provided. Further, in the catalyst 4, about 2, 000 ppm or more of carbon monoxide performs oxidation and reduction functions, so the heat generation amount thereof is larger compared with that in the Patent Document 2 (about 400 ppm of carbon monoxide is oxidized). According to the present embodiment, a great amount of heat can be recovered effectively by the feed-water preheater 20.

[Embodiment 2]

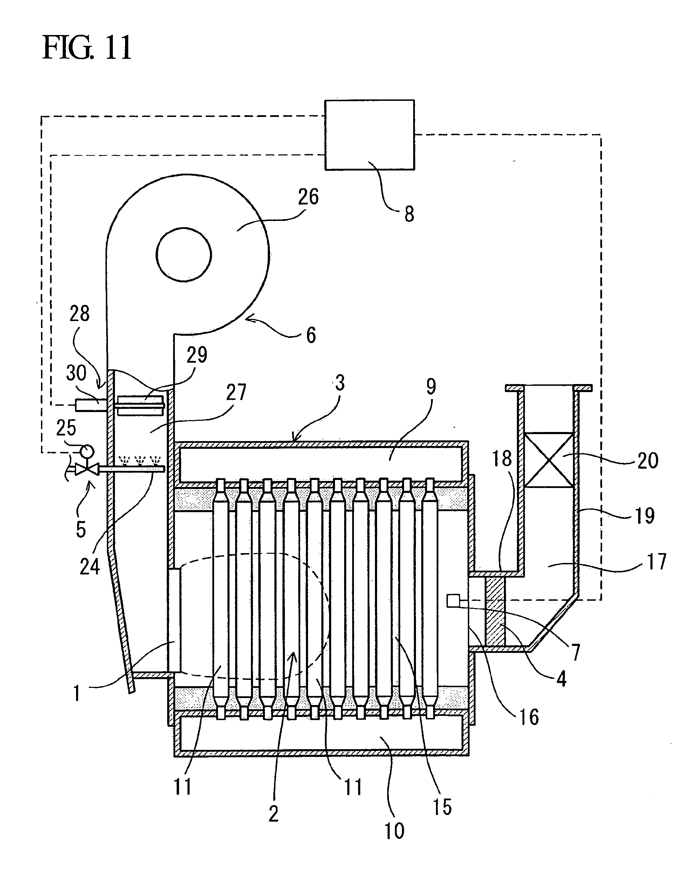

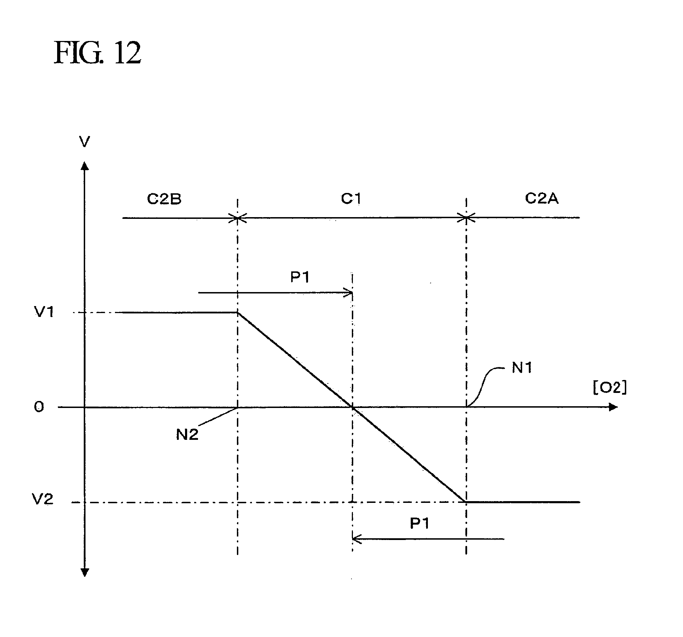

Another Embodiment 2 of the present invention will be explained by referring to FIG. 11 and FIG. 12. In Embodiment 2, a sensor 7 for detecting the concentration of oxygen is installed not on the secondary side of the catalyst 4 but on the primary side. The sensor 7 is used exclusively as a sensor for detecting the concentration of oxygen. Then, FIG. 12 shows control characteristics of the motor 34 on the basis of the sensor 7. Hereinafter, an explanation will be made only for parts different from those of Embodiment 1, with an explanation omitted for common parts.

In Embodiment 2, an air ratio is controlled indirectly by detecting the concentration of oxygen on the primary side of the catalyst 4 by using the sensor 7 in such a manner that a reference set air ratio m0 is set to 1.0 (the concentration of oxygen on the secondary side of the catalyst 4 is decreased to zero). It is now known on the basis of various experiment results that where the concentration of oxygen $O_2$ on the primary side of the catalyst 4 is controlled to a value of 0% < $O_2 \leq 1.00\%$, formula (2) is satisfied and the concentration of oxygen on the secondary side of the catalyst 4 is decreased to substantially zero. In other words, it is known that the air ratio can be set to substantially 1.

As shown in FIG. 12, the air ratio control program of Embodiment 2 includes control procedures in which a first control zone C1 for changing based on a value E detected by the sensor 7 (oxygen concentration signal) a feeding velocity V of the motor 34 (driving amount per unit time) depending on a difference between the thus detected value and the set oxygen concentration value and second control zones C2A and C2B for dividing the feeding velocity V into a first set value and a second set value, respectively, outside the first control zone C1 are provided to control a driving amount of the motor 34.

A range in which the first control zone is set will be controlled so as to fall within a range set by oxygen concentration N1 and oxygen concentration N2. A feeding velocity V at the first control zone will be calculated by referring to formula (4) in the same manner as in Embodiment 1.

[Embodiment 3]

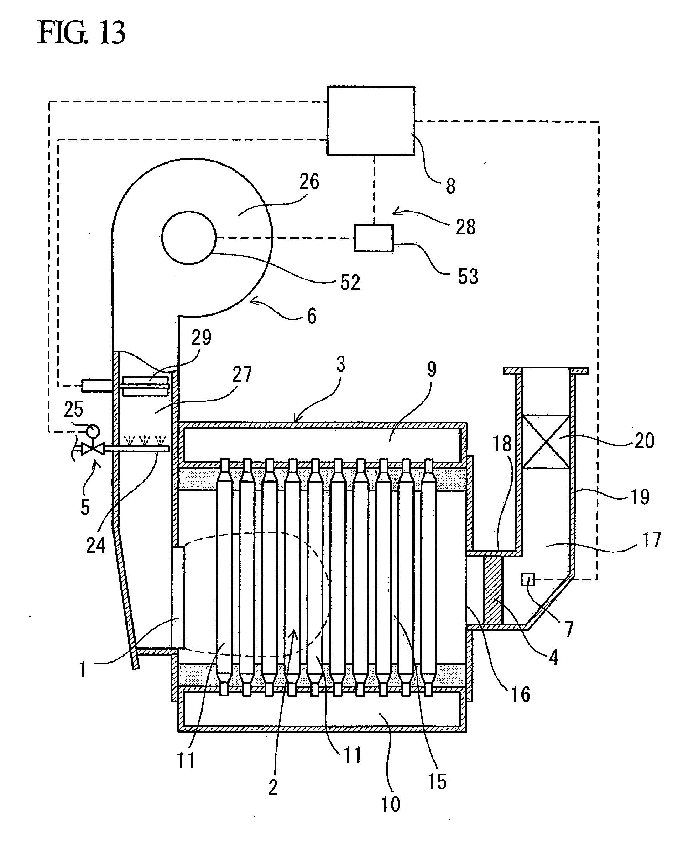

In Embodiment 3, by referring to FIG. 13, the air ratio controller 28 includes a blower motor 52 for driving the blower 26 and an inverter 53 for controlling a rotating speed of the motor 52. In Embodiment 4, air ratio control and concentration ratio constant control are obtained not by using the damper 29 but by using the inverter 53. The control of the blower motor 52 by the controller 8 can be constituted so as to prevent the overshooting and hunting given in FIG. 9 covering Embodiment 1. The damper 29 controls air flow on high combustion and on low combustion by lowering the aperture on ignition and increasing the aperture during stable combustion after ignition. This air flow control can be obtained by using the inverter 53. The present invention shall not be limited thereto but may be constituted so that the air flow control on ignition or the like is obtained either by the damper 29 or the inverter 53. In Embodiment 3, other constitutions are similar to those of Embodiment 1, an explanation of which will be omitted here.

[Embodiment 4]

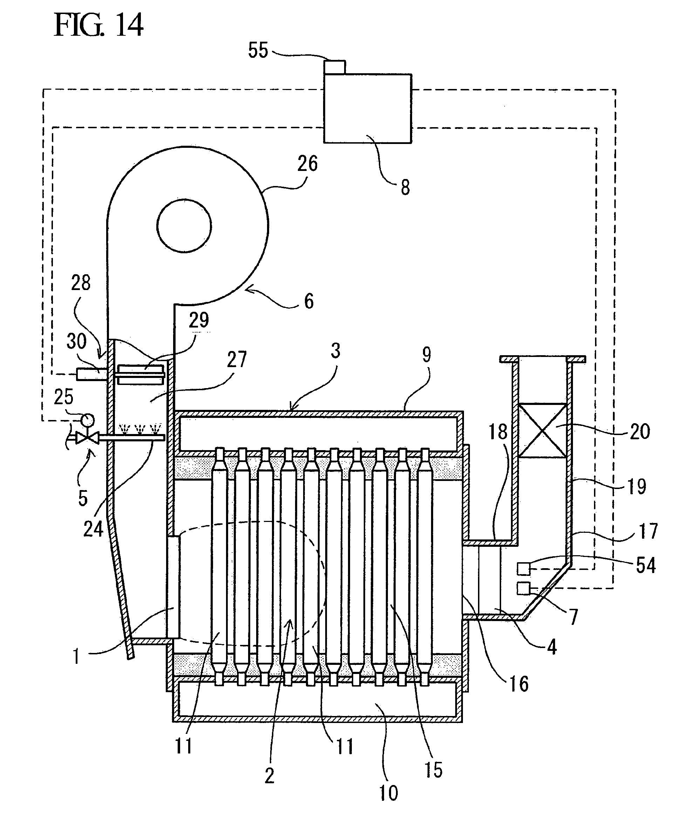

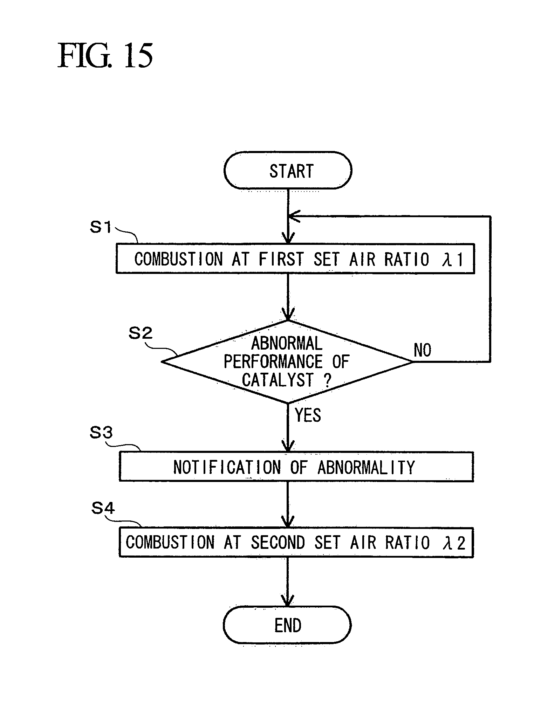

Next, Embodiment 4 including an abnormality time control program for preventing the emission of a great amount of carbon monoxide at an abnormal time of the catalyst 4 in the air ratio control program in Example 1 will be described with reference to FIGS. 14 and 15. Hereinafter, the configuration different from that in Example 1 will be mainly described.

Referring to FIG. 14, a second sensor 54 for detecting the abnormality of the catalyst 4 is provided on a secondary side of the catalyst 4. The second sensor 54 detects the concentration of carbon monoxide. Further, a display unit 55 is provided as notification device so as to be adj acent to the controller 8. Further, the abnormality time control program includes a program for controlling the air ratio to be a second set air ratio λ2 (for example, 1.25) so that the concentration of carbon monoxide on the primary side of the catalyst 4 becomes a second set value equal to or lower than the emission reference value, in order to set the concentration of carbon monoxide on the secondary side of the catalyst 4 to be the emission reference value (300 ppm) or less even in the case where the catalyst 4 does not function normally.

The abnormality time control program is configured as follows. When the detected value of the second sensor 54 exceeds a set value (forexample, 300 ppm) that is an abnormality determination reference value, the control device first notifies abnormality by the notification unit 55, and shifts the combustion at the first set air ratio $\lambda 1$ to the combustion at the second set air ratio $\lambda 2$.

The operation of Embodiment 4 will be described with reference to FIG. 15. In a processing step S1 (hereinafter, a processing step SN is merely referred to as SN), the burner 1 effects combustion at the first set air ratio $\lambda 1$. In this state, in S2, it is determined if the detected value of the second sensor 54 exceeds the set value. When NO is determined in S2, the process is returned to S1.

When the detected value exceeds a set value as a result of the decrease in the performance of the catalyst 4, YES is determined, and the process is shifted to S3. The controller 8 sends a signal to the display unit 55 as the notification device, and notifies abnormality. Then, the process is shifted to S4, and the combustion at the second set air ratio $\lambda 2$ is started from the combustion at the first set air ratio $\lambda 1$. Owing to the combustion at the second set air ratio $\lambda 2$, the concentration of carbon monoxide contained in gas on the primary side of the catalyst 4 becomes the emission reference or less (for example, 100 to 50 ppm). Consequently, even if the catalyst 4 does not function at all, the concentration of emitted carbon monoxide can be set to be an emission reference value or less.

The administrator or maintenance member of the boiler of Embodiment 4 recognizes that the catalyst 4 is abnormal based on the notification by the display unit 55, and performs exchange and maintenance, thereby normalizing the function of the catalyst. After that, the combustion at the first set air ratio $\lambda 1$ can be started.

[Embodiment 5]

Embodiment 5 of the present invention will be described based on FIG. 16. In Embodiment 5, the second sensor 54 is used as a sensor for detecting the abnormality of the first sensor 7. The second sensor 54 detects the same air ratio as that of the first sensor 7.

The abnormality time control program of Embodiment 5 is executed in the control procedure shown in FIG. 16. More specifically, in S11, the air ratio control by the first sensor 7 is performed as described above. In S12, the abnormality determination of the first sensor 7 is performed. This determination includes the following processing. First, the detected value of the second sensor 54 is compared with the detected value of the first sensor. Then, when the second sensor 54 has a normal value, i.e., the second sensor 54 detects a set air ratio, whereas the first sensor 7 has an abnormal value, i.e., the first sensor 7 does not detect the set air ratio, the set air ratio is changed. Then, when the first sensor 7 does not detect the changed air ratio, and the second sensor 54 detects the changed air ratio, it is determined that the first sensor 7 is abnormal.

When the abnormality is determined in S12, the air ratio control by the second sensor 54 is conducted in S13. Thus, the air ratio is controlled by the second sensor 54 when the first sensor 7 is abnormal. Therefore, carbon monoxide which exceeds the processing ability of the catalyst 4 can be prevented from being generated owing to the abnormality of the first sensor 7, and as a result, the emission of a great amount of carbon monoxides is prevented.

The present invention shall not be limited to Embodiments 1 to 5, which have been explained. Since the characteristics of air ratio-NOx/CO shown in FIG. 4, for example, are different in curve and concentration value, depending on a structure of the burner 1 or the storage water heater body 3 used in the combustion apparatus, different characteristics may be used. Further, in Embodiments 1 and 2, a set air ratio is 1.0 or more. The air ratio may be a value lower than 1.0 as long as combustion characteristics are not affected or no hydrocarbons are contained.

Further, in Embodiment 2, an $O_2$ concentration sensor is used as the sensor 7 but a CO concentration sensor may be used. The damper position adjusting device 30 can be modified in structure in various ways. The motor 34 can also include a gear motor (not illustrated) other than a stepping motor. Still further, the damper position adjusting device 30 is controlled by using the single controller (controller for boiler) 8. In addition to the controller 8, another controller (not illustrated) for the damper position adjusting device 30 may be installed and connected to the sensor 7 and the controller 8, thereby controlling an air ratio.

**Claims**

**1.** A boiler, comprising:

a premixed burner for burning a hydrocarbon-containing fuel to generate a gas free of hydrocarbon but containing oxygen, nitrogen oxides, and carbon monoxide;

a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide; and
an air-ratio adjusting device for adjusting an air ratio of the premixed burner,
wherein the premixed burner and the water tube group have characteristics in which a concentration ratio of oxygen, nitrogen oxides, and carbon monoxide in gas on a primary side of the oxidation catalyst becomes a predetermined concentration ratio, assuming that the air ratio is a set air ratio,
the oxidation catalyst has characteristics in which a concentration of nitrogen oxides on a secondary side of the oxidation catalyst is decreased to substantially zero and a concentration of carbon monoxide on the secondary side of the oxidation catalyst is decreased to substantially zero or a predetermined value or less, assuming that the concentration ratio is the predetermined concentration ratio, and
the predetermined concentration ratio is kept to be constant by being controlled to the set air ratio by the air-ratio adjusting device.

**2.** A boiler, comprising:

a premixed burner for burning a hydrocarbon-containing fuel to generate a gas free of hydrocarbon but containing oxygen, nitrogen oxides, and carbon monoxide;
a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide; and
an air-ratio adjusting device for adjusting an air ratio of the premixed burner,
wherein the premixed burner and the water tube group have characteristics in which a concentration ratio K of oxygen, nitrogen oxides, and carbon monoxide in gas on a primary side of the oxidation catalyst becomes a predetermined reference concentration ratio K0, assuming that the air ratio is a reference set air ratio,
the oxidation catalyst has characteristics in which a concentration of nitrogen oxides and a concentration of carbon monoxide on a secondary side of the oxidation catalyst are decreased to substantially zero, assuming that the concentration ratio K is the predetermined reference concentration ratio K0, and
the predetermined concentration ratio is kept to be constant by being controlled to the reference set air ratio by the air-ratio adjusting device.

**3.** A boiler, comprising:

a premixed burner for burning a hydrocarbon-containing fuel to generate a gas free of hydrocarbon but containing oxygen, nitrogen oxides, and carbon monoxide;
a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide; and
an air-ratio adjusting device for adjusting an air ratio of the premixed burner,
wherein the premixed burner and the water tube group have characteristics in which a concentration ratio K of oxygen, nitrogen oxides, and carbon monoxide in gas on a primary side of the oxidation catalyst becomes a first predetermined concentration ratio K1, assuming that the air ratio is a first set air ratio,
the oxidation catalyst has characteristics in which a concentration of nitrogen oxides on a secondary side of the oxidation catalyst is decreased to substantially zero and a concentration of carbon monoxide on the secondary side of the oxidation catalyst is decreased to a predetermined value or less, assuming that the concentration ratio K is the first predetermined concentration ratio K1, and
the predetermined concentration ratio is kept to be constant by being controlled to the first set air ratio by the air-ratio adjusting device.

**4.** The boiler according to Claim 2 or 3, wherein:

a formula for determining the predetermined reference concentration ratio K0 is given as the following formula (1);
the predetermined reference concentration ratio K0 satisfies the following formula (2); and
the first predetermined concentration ratio K1 is made smaller than the reference concentration ratio K0:

$$([NOx] + 2[O_2]) / [CO] = K \cdots (1)$$

$$1.0 \leq K = K0 \leq 2.0 \qquad \cdots(2)$$

where [CO], [NOx], and [O$_2$] represent concentrations of carbon monoxide, nitrogen oxides, and oxygen, respectively, and satisfying a condition of [O$_2$] > 0.

5. A boiler, comprising:

a premixed burner for burning a hydrocarbon-containing fuel to generate a gas free of hydrocarbon but containing oxygen, nitrogen oxides, and carbon monoxide;
a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide;
a sensor for detecting an air ratio of the premixed burner; and
an air-ratio adjusting device for controlling the premixed burner to a set air ratio based on a detected signal of the sensor,
wherein the premixed burner and the water tube group are configured so that, when the air-ratio adjusting device is used to adjust the air ratio to the set air ratio, a predetermined concentration of oxygen, nitrogen oxides, and carbon monoxide on a primary side of the oxidation catalyst, at which a concentration of nitrogen oxides on a secondary side of the oxidation catalyst is decreased to substantially zero and a concentration of carbon monoxide on the secondary side of the oxidation catalyst is decreased to substantially zero or a predetermined value or less, is obtained.

6. A boiler, comprising:

a premixed burner for burning a hydrocarbon-containing fuel to generate a gas free of hydrocarbon but containing oxygen, nitrogen oxides, and carbon monoxide;
a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide;
a sensor for detecting an air ratio of the premixed burner; and
an air-ratio adjusting device for controlling the premixed burner to a set air ratio based on a detected signal of the sensor,
wherein the premixed burner and the water tube group have characteristics of air ratio-NOx/CO in which, when the air ratio is adjusted to the set air ratio by the air-ratio adjusting device, a concentration of nitrogen oxides and a concentration of oxygen on a secondary side of the oxidation catalyst is decreased to substantially zero, and a concentration of carbon monoxide on the secondary side of the oxidation catalyst is decreased to substantially zero or a predetermined value or less.

7. A boiler, comprising:

a premixed burner for burning a hydrocarbon-containing fuel to generate a gas free of hydrocarbon but containing oxygen, nitrogen oxides, and carbon monoxide;
a water tube group for absorbing heat from the gas generated by the premixed burner;
an oxidation catalyst for oxidizing carbon monoxide contained in the gas after the passage through the water tube group by oxygen and reducing the nitrogen oxides contained in the gas by carbon monoxide;
a sensor for detecting an air ratio of the premixed burner; and
an air-ratio adjusting device for controlling the premixed burner to a set air ratio based on a detected signal of the sensor,
wherein the premixed burner and the water tube group are configured so that, when the air-ratio adjusting device is used to adjust the air ratio to the set air ratio, the concentration of carbon monoxide on a primary side of the oxidation catalyst is substantially equal to or greater than a value obtained by adding a concentration of carbon monoxide decreased inside the oxidation catalyst due to the oxidation to a concentration of carbon monoxide decreased inside the catalyst due to the reduction.

8. A boiler, comprising:

a premixed burner for burning a hydrocarbon-containing fuel to generate a gas free of hydrocarbon but containing oxygen, nitrogen oxides, and carbon monoxide;

a water tube group for absorbing heat from the gas generated by the premixed burner;

an oxidation catalyst for oxidizing carbon monoxide contained in the gas after the passage through the water tube group by oxygen and reducing the nitrogen oxides contained in the gas by carbon monoxide;

a sensor for detecting an air ratio of the premixed burner; and

an air-ratio adjusting device for controlling the premixed burner to a set air ratio based on a detected signal of the sensor,

wherein the premixed burner and the water tube group are configured so that, when the air-ratio adjusting device is used to adjust the air ratio to the set air ratio, a concentration ratio of the gas before flowing into the oxidation catalyst satisfies the following formula (3):

$$([NOx] + 2[O_2]) \; / \; [CO] \leq 2.0 \; \cdots (3)$$

where [CO], [NOx], and [O$_2$] represent concentrations of carbon monoxide, nitrogen oxides, and oxygen, respectively, and satisfying a condition of [O$_2$] > 0.

9.  The combustion apparatus according to any one of Claims 5 to 8, wherein the set air ratio is substantially 1.0.

10. A boiler, comprising:

a premixed burner for burning a hydrocarbon-containing fuel to generate a gas free of hydrocarbon but containing oxygen, nitrogen oxides, and carbon monoxide;

a water tube group for absorbing heat from the gas generated by the premixed burner;

an oxidation catalyst for oxidizing carbon monoxide contained in the gas after the passage through the water tube group by oxygen and reducing the nitrogen oxides contained in the gas by carbon monoxide; and

an air-ratio adjusting device for adjusting an air ratio of the premixed burner,

wherein the premixed burner and the water tube group have characteristics of air ratio-NOx/CO on a primary side of the oxidation catalyst regarding the gas containing oxygen, nitrogen oxides, and carbonmonoxide on the primary side of the oxidation catalyst obtained by adjusting in a vicinity of an air ratio of 1.0 by the air-ratio adjusting device,

the oxidation catalyst has characteristics of air ratio-NOx/CO on a secondary side of the oxidation catalyst obtained by bringing a gas having the characteristics of air ratio-NOx/CO on the primary side into contact with the oxidation catalyst, and

the air-ratio adjusting device controls an air ratio of the premixed burner at a set air ratio at which a concentration of nitrogen oxides on the secondary side of the oxidation catalyst is decreased to substantially zero in a NOx/CO decreasing region of the characteristics of air ratio-NOx/CO on the secondary side.

11. A boiler, comprising:

a premixed burner for burning a hydrocarbon-containing fuel to generate a gas free of hydrocarbon but containing oxygen, nitrogen oxides, and carbon monoxide;

a water tube group for absorbing heat from the gas generated by the premixed burner;

an oxidation catalyst that is brought into contact with the gas containing oxygen, nitrogen oxides, and carbon monoxide after the passage through the water tube group; and

an air-ratio adjusting device for adjusting a ratio between a combustible air amount of the premixed burner and a fuel amount,

wherein the oxidation catalyst has characteristics of decreasing a concentration of carbon monoxide by: when a concentration ratio of oxygen, nitrogen oxides, and carbon monoxide in a gas on a primary side of the oxidation catalyst at which a concentration of nitrogen oxides and a concentration of carbon monoxide on a secondary side of the oxidation catalyst are decreased to substantially zero is a reference concentration ratio, and the concentration ratio is the reference concentration ratio, concentrations of oxygen, nitrogen oxides, and carbon monoxide on the secondary side of the oxidation catalyst being decreased to substantially zero; and when a concentration of oxygen on the primary side is lower than a concentration of the reference oxygen, concentrations of nitrogen oxides and oxygen on the secondary side of the oxidation catalyst being decreased to substantially zero, and

the air-ratio adjusting device adjusts a concentration of oxygen on the primary side of the oxidation catalyst with respect to the concentration of the reference oxygen by adjusting the air ratio based on concentrations of oxygen and/or carbon monoxide on the secondary side of the oxidation catalyst, and decreases a concentration of nitrogen oxides on the secondary side of the oxidation catalyst and the concentration of carbon monoxide on the secondary side of the oxidation catalyst to substantially zero, thereby decreasing the concentration of carbon monoxide or decreasing the concentration of carbon monoxide to substantially zero.

12. The boiler according to any one of Claims 1 to 3, 5 to 8, 10, and 11, comprising a nitrogen oxide generation suppressing device for suppressing a temperature of the gas to suppress a concentration of nitrogen oxides to a predetermined value or less.

13. The boiler according to any one of Claims 1 to 3, 5 to 8, 10, and 11, comprising a feed-water preheater on the secondary side of the oxidation catalyst.

14. The boiler according to any one of Claims 1 to 3, 5 to 8, 10, and 11, comprising:

a second sensor for detecting abnormality of the catalyst or the sensor;
a notifying device; and
a control device for determining the abnormality based on a detected value of the second sensor to notify the abnormality by the notifying device.

FIG. 1

FIG. 2

FIG. 3

FIG. 4

# FIG. 5

FIG. 6

FIG. 7

FIG. 8

FIG. 9

FIG. 10

| RATIO OF CONCENTRATION | ADJUSTMENT | | CONCENTRATION OF NOx (ppm) | CONCENTRATION OF CO (ppm) | CONCENTRATION OF O₂ (ppm) |
|---|---|---|---|---|---|
| 0.91 | ADJUSTMENT 1 | BEFORE PASSING | 88 | 3114 | 1380 |
| | | AFTER PASSING | 0.4 | 103.0 | ≪100 |
| 1.01 | ADJUSTMENT 0 | BEFORE PASSING | 89 | 2949 | 1450 |
| | | AFTER PASSING | 1.0 | 66.0 | ≪100 |
| 1.44 | ADJUSTMENT 0 | BEFORE PASSING | 89 | 2461 | 1730 |
| | | AFTER PASSING | 0.0 | 18.0 | ≪100 |
| 1.63 | ADJUSTMENT 0 | BEFORE PASSING | 89 | 2414 | 1920 |
| | | AFTER PASSING | 0.0 | 9.0 | ≪100 |
| 1.84 | ADJUSTMENT 0 | BEFORE PASSING | 89 | 2250 | 2030 |
| | | AFTER PASSING | 0.8 | 11.0 | ≪100 |
| 2.18 | ADJUSTMENT 2 | BEFORE PASSING | 88 | 2069 | 2210 |
| | | AFTER PASSING | 26.1 | 1.0 | ≪100 |
| 2.55 | ADJUSTMENT 2 | BEFORE PASSING | 88 | 1922 | 2410 |
| | | AFTER PASSING | 57.2 | 1.1 | 510 |
| 5.11 | | BEFORE PASSING | 87 | 1360 | 3430 |
| | | AFTER PASSING | 78.9 | 0.0 | 2220 |

## FIG. 11

## FIG. 12

FIG. 13

FIG. 14

FIG. 15

```
                        ┌──────────────┐
                        │    START     │
                        └──────┬───────┘
                               │
                               ▼ ◄──────────────────────┐
S1 ┌─────────────────────────────────────────────────┐ │
   │  COMBUSTION AT FIRST SET AIR RATIO  λ1           │ │
   └─────────────────────────┬───────────────────────┘ │
                             │                          │
                             ▼                          │
S2              ◇ ABNORMAL                              │
              ◇   PERFORMANCE OF  ◇──── NO ─────────────┘
                ◇  CATALYST ?   ◇
                      │
                      │ YES
                      ▼
S3 ┌─────────────────────────────────────────────────┐
   │        NOTIFICATION OF ABNORMALITY               │
   └─────────────────────────┬───────────────────────┘
                             │
                             ▼
S4 ┌─────────────────────────────────────────────────┐
   │  COMBUSTION AT SECOND SET AIR RATIO  λ2          │
   └─────────────────────────┬───────────────────────┘
                             │
                             ▼
                        ┌──────────────┐
                        │     END      │
                        └──────────────┘
```

## FIG. 16

```
            ( START )
               │
               ▼◄──────────────────┐
S11  ┌──────────────────────────────┐   │
     │ AIR RATIO CONTROL BY FIRST SENSOR │   │
     └──────────────────────────────┘   │
               │                          │
               ▼                          │
S12         ╱ ABNORMAL ╲      NO          │
          ╱ PERFORMANCE OF FIRST ╲───────┘
           ╲   SENSOR ? ╱
               │ YES
               ▼
S13  ┌──────────────────────────────┐
     │  NOTIFICATION OF ABNORMALITY  │
     └──────────────────────────────┘
               │
               ▼
S14  ┌──────────────────────────────┐
     │ AIR RATIO CONTROL BY SECOND SENSOR │
     └──────────────────────────────┘
               │
               ▼
             ( END )
```

## FIG. 17

[NOx]=0, [CO]=0

## INTERNATIONAL SEARCH REPORT

| | International application No. |
|---|---|
| | PCT/JP2007/058202 |

| A. CLASSIFICATION OF SUBJECT MATTER |
|---|
| *F23C99/00* (2006.01)i, *B01D53/94* (2006.01)i, *F23C13/00* (2006.01)i, *F23N1/02* (2006.01)i, *F23N5/00* (2006.01)i |

According to International Patent Classification (IPC) or to both national classification and IPC

| B. FIELDS SEARCHED |
|---|
| Minimum documentation searched (classification system followed by classification symbols) |
| F23C99/00, B01D53/94, F23C13/00, F23N1/02, F23N5/00 |

| Documentation searched other than minimum documentation to the extent that such documents are included in the fields searched |
|---|
| Jitsuyo Shinan Koho        1922-1996   Jitsuyo Shinan Toroku Koho   1996-2007 |
| Kokai Jitsuyo Shinan Koho  1971-2007   Toroku Jitsuyo Shinan Koho   1994-2007 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 07-133905 A  (Tokyo Gas Co., Ltd.), 23 May, 1995 (23.05.95), Column 2, line 43 to column 3, line 20; Figs. 1 to 4 (Family: none) | 1-14 |
| A | JP 05-038421 A  (Osaka Gas Co., Ltd.), 19 February, 1993 (19.02.93), Claim 1; examples; Figs. 5 to 9 (Family: none) | 1-14 |
| A | JP 2004-069139 A  (Miura Co., Ltd.), 04 March, 2004 (04.03.04), Page 6, line 40 to page 7, line 4; page 8, line 13 to page 9, line 35; Figs. 1, 4 to 5 (Family: none) | 1-14 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 06 July, 2007 (06.07.07) | 17 July, 2007 (17.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

| International application No. |
| --- |
| PCT/JP2007/058202 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2004-077085 A (Miura Co., Ltd.), 11 March, 2004 (11.03.04), Page 6, line 44 to page 7, line 10; page 8, line 20 to page 9, line 42; Figs. 1, 4 to 5 (Family: none) | 1-14 |
| A | JP 2003-275543 A (The Japan Steel Works, Ltd.), 30 September, 2003 (30.09.03), Column 3, lines 31 to 42; Fig. 1 (Family: none) | 1-14 |
| A | JP 61-291026 A (Hitachi, Ltd.), 20 December, 1986 (20.12.86), Page 2, upper left column, line 1 to upper right column, line 6 & EP 0208424 A1 | 1-14 |
| A | JP 06-065708 U (Ishikawajima-Harima Heavy Industries Co., Ltd.), 16 September, 1994 (16.09.94), Page 2, line 1 to page 6, line 28; Fig. 1 (Family: none) | 1-14 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3221582 B
- US 5353748 A
- JP 2004125378 A
- US 6792895 B
- JP 2001241619 A
- JP 5038421 A
- JP 2003275543 A